(19) Europäisches Patentamt
European Patent Office
Office européen des brevets

(11) EP 2 939 818 B1

(12) EUROPEAN PATENT SPECIFICATION

(45) Date of publication and mention
of the grant of the patent:
13.03.2019 Bulletin 2019/11

(21) Application number: 13869192.8

(22) Date of filing: 11.12.2013

(51) Int Cl.:
B29C 70/10 (2006.01)          B29C 43/34 (2006.01)
B29C 70/06 (2006.01)          B32B 3/30 (2006.01)
B32B 5/28 (2006.01)           C08J 5/04 (2006.01)
B29K 101/12 (2006.01)         B29K 105/08 (2006.01)
B32B 5/00 (2006.01)           B32B 5/02 (2006.01)
B32B 5/06 (2006.01)           B32B 5/10 (2006.01)
B32B 5/12 (2006.01)           B32B 5/14 (2006.01)
B32B 7/00 (2019.01)           B32B 7/02 (2019.01)
B32B 7/04 (2019.01)

(86) International application number:
PCT/JP2013/083149

(87) International publication number:
WO 2014/103711 (03.07.2014 Gazette 2014/27)

(54) MOLDED PRODUCT HAVING HOLLOW STRUCTURE AND PROCESS FOR PRODUCING SAME

FORMKÖRPER MIT HOHLER STRUKTUR UND VERFAHREN ZUR HERSTELLUNG DAVON

CORPS MOULÉ POSSÉDANT UNE STRUCTURE CREUSE, ET PROCÉDÉ DE FABRICATION DE CELUI-CI

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 26.12.2012 JP 2012282879

(43) Date of publication of application:
04.11.2015 Bulletin 2015/45

(73) Proprietor: Toray Industries, Inc.
Tokyo 103-8666 (JP)

(72) Inventors:
• FUJIOKA, Takashi
Iyo-gun
Ehime 791-3193 (JP)
• TSUCHIYA, Atsuki
Nagoya-shi
Aichi 4558502 (JP)

(74) Representative: Prüfer & Partner mbB
Patentanwälte · Rechtsanwälte
Sohnckestraße 12
81479 München (DE)

(56) References cited:
WO-A1-2012/117593      JP-A- S6 387 206
JP-A- H04 201 750      JP-A- H11 226 984
JP-A- S62 208 932      JP-A- 2000 079 649
JP-A- 2006 044 262     JP-A- 2008 230 235
JP-A- 2010 012 770     JP-A- 2013 176 984
US-A1- 2010 028 616    US-B1- 6 942 915

## EP 2 939 818 B1

**Description**

**TECHNICAL FIELD**

The present invention relates to a molded product of fiber-reinforced resin having a hollow structure.

Background Art

Being lightweight as well as having good mechanical characteristics, sandwich structures and hollow structures formed of fiber-reinforced resin (FRP) have been widely used in different areas including transport equipment, such as aircraft and automobiles, construction structures, such as aseismatic reinforcing material, and electric/electronic equipment housing, such as personal computer cases that require wall thinness, which represent the major applications in recent years.

Patent document 1 discloses prepreg that serves to produce moldings having both good isotropic mechanical characteristics and a complicated shape and insists that this technique is helpful for producing thin-wall molded products, which have been difficult to produce by the conventional laminate molding techniques. However, although Patent document 1 mentions molded products of a rib geometry, no rib-shaped molded products with high strength and rigidity are included in the disclosed ones, suggesting that the use of the technique may result in molded products having weak points under external forces.

Patent document 2 discloses a sandwich structure that consists mainly of a lightweight core that has a vacancy-containing structure and fiber-reinforced material that is formed of continuous reinforcing fiber and matrix resin and covers both surfaces of the core and it is insisted that this technique is helpful for producing molded products that are thin, lightweight, and highly rigid. In the sandwich structure, however, the core and the fiber-reinforced material are bonded to each other to form a unified body, which means that the bonding interface is formed between different materials, possibly leading to molded products containing weak points.

Patent document 3 discloses a skin-integrated moldings formed of a skin layer and a fiber-reinforced layer and it is insisted that this technique can produce a body consisting of a skin layer and a resin layer in which strengthening fiber is oriented in three-dimensional directions that sandwich a resin layer in which strengthening fiber is oriented in two-dimensional directions. It is suggested that the technique is useful in that bodies of complicated shapes such as rib geometry can be produced easily and the influence of voids on the surface can be reduced. However, the strengthening fiber existing in the resin layer that forms such a rib is very short in fiber length and cannot reinforce the rib etc. effectively. It is feared that the orientation of the strengthening fiber may deteriorate in the course of the molding process, possibly leading to weak directions under external forces.

Patent document 4 discloses a method to produce a reinforced board that is formed of thermoplastic resin and has a vacancy-containing structure and it is insisted that this production method, in which two sheets with protruding parts are bonded to each other to form a unified body, serves for easy production of thick-wall products. However, such a board is formed only of thermoplastic resin and accordingly, the protruding parts may be low in strength and unable to maintain the intended shape when a surface load is applied to the entire body of the structure.

It is known that when a bending stress is applied to a molded product as proposed in Patent documents 2 to 4, the resulting stress distribution will be such that the stress increases from the central surface (neutral axis) to reach a maximum at each outer surface. It is thought that if such a bonding interface that may act as a weak point or the bottom of a rib that is low in strength exists near the surface of the molded product, they can cause a deterioration in mechanical properties of the molded product.

**PRIOR ART DOCUMENTS**

**PATENT DOCUMENTS**

Patent document 1: Japanese Patent No. 4862913
Patent document 2: Japanese Unexamined Patent Publication (Kokai) No. 2008-230235
Patent document 3: Japanese Unexamined Patent Publication (Kokai) No. HEI 6-39861
Patent document 4: Japanese Unexamined Patent Publication (Kokai) No. SHO 49-67962

JP H04 201750 A discloses a door trim main unit in an interior vehicle that comprises a first base material and a second base material, whereby said first and second base materials are made of glass fiber reinforced PU foam. Ribs project from a flat portion of the first base material toward the second base material, thus forming a hollow structure.

## SUMMARY OF THE INVENTION

## PROBLEMS TO BE SOLVED BY THE INVENTION

In view of these problems with the conventional techniques, an object of the present invention is to provide a molded fiber-reinforced resin product having a hollow structure that is resistant to bending stress as well as highly rigid and lightweight. Another object of the present invention is to provide a method that can produce such a molded product easily.

## MEANS OF SOLVING THE PROBLEMS

To solve the above problems, the present invention provides a molded product according to claim 1.

Molded products that has a conventional sandwich structure consist mainly of a skin layer of high-rigidity material, such as metal and fiber-reinforced resin, that is located as the outermost layer and unified with a core of highly lightweight material having a foam or honeycomb structure and contained at the central part, and it is known that when a bending stress is applied to such an unified molded product, the resulting stress increases from the central surface (neutral axis) to reach a maximum at each outer surface. Bonding of heterogeneous materials is not easy and the bonding part between the heterogeneous materials can act as a weak point in the molded product. Accordingly, it is thought that the existence of such a bonding part in the outermost layer of the molded product can result in a deterioration in mechanical properties of the molded product.

According to the present invention, however, both the surface layer part and the core part are formed of fiber-reinforced resin (A), which is composed mainly of reinforcing fiber (a1) and matrix resin (a2). Thus, no bonding part exists between these parts, and threads of reinforcing fiber (a1) with a number-average fiber length Ln of 1 mm or more extend in an effective manner between the surface layer part and the core part with a density of 400 threads/mm$^2$ or more at the boundary surface. This serves to form a core part with a higher rigidity and this high rigidity can be maintained even when a bending stress is applied.

For the molded product according to the present invention, the reinforcing fiber (a1) in the core part preferably has a two-dimensional orientation angle $\theta$r, which will be defined later, of 10 to 80 degrees. The existence of reinforcing fiber in such a state in the core part allows the molded product to show isotropic physical properties under external forces, allowing a higher flexibility of design for the molded product.

In the molded product according to the present invention, the homogenization, which will defined later, of the surface layer part and the core part in the first member (I) is preferably 70% or more. This makes it possible to avoid a state where the degree of fiber reinforcement is extremely low in either the surface layer part or the core part, thereby serving to improve the rigidity of the entire molded product.

For a thread of the reinforcing fiber (a1) that extends penetratingly between the surface layer part and the core part in the molded product according to the present invention, it is preferable that the fiber length rate Lp, which is calculated by equation (1) given later if the length relation between the length Lr ($\mu$m) of that segment of the thread which exists in the core part and the length Lf ($\mu$m) of that segment of the thread which exists in the surface layer part is as represented by Lr $\leq$ Lf, or by equation (2) given later if it is as represented by Lr > Lf, be 30% to 50% and also that the fiber reinforced rate Fr, which is calculated by equation (3) given later if the length relation between the length Lr ($\mu$m) of that segment of the thread which exists in the core part and the length Lf ($\mu$m) of that segment of the thread which exists in the surface layer part is as represented by Lr $\leq$ Lf, or by equation (4) given later if it is as represented by Lr > Lf, be 10 or more. If the fiber length rate is in the above range for a reinforcing fiber thread that extends penetratingly between the surface layer part and the core part, it means that the boundary surface between the surface layer part and the core part exists in or near the central part of the reinforcing fiber thread and that the core part is connected firmly to the surface layer part, allowing the bottom of the core part to be reinforced effectively. If the fiber reinforced rate is in the above range, furthermore, it means that there exists a reinforcing fiber thread that has a long reinforcing fiber length in each of the parts, allowing the core part and the surface layer part to be reinforced firmly.

For the molded product according to the present invention, the projected area of the core part preferably accounts for 5% to 80% of the projected area of the surface layer part. If the core part accounts for such a proportion, the molded product can be both rigid and lightweight.

For the molded product according to the present invention, it is preferable for the second member (II) to be a member that has a protruding core part similar to the one in the first member (I). The use of such members makes it possible to easily produce a molded product having a large thickness as well as higher rigidity and improved lightweightness. This also allows the bonding part, which can be a weak point, to be located near the central surface (neutral axis), thereby acting to further increase the rigidity of the molded product.

For the molded product according to the present invention, it is preferable that either the largest projected plane of the hollow structure formed by the protruding shapes that constitute the first member (I) or the largest projected plane of the hollow structure formed by the protruding shapes that constitute the second member (II) have at least one shape selected from the group consisting of circle, ellipse, rhombus, equilateral triangle, square, rectangle, and regular hexagon. A regular arrangement of such shapes allows the molded product as a whole to show homogeneous characteristics. From this point of view, it is more preferable that both the largest projected plane of the hollow structure formed by the protruding shapes that constitute the first member (I) and the largest projected plane of the hollow structure formed by the protruding shapes that constitute the second member (II) have at least one shape selected from the group consisting of circle, ellipse, rhombus, equilateral triangle, square, rectangle, and regular hexagon.

The molded product according to the present invention preferably has a maximum thickness of 3.0 mm or less. If the molded product has such a thickness, the molded product can satisfy the required thinness requirement.

The molded product according to the present invention preferably has a specific gravity of 1.0 or less. If having such a specific gravity, the molded product can satisfy the required lightweightness requirement.

For the molded product according to the present invention, it is preferable that either the protrusion shapes contained in the first member (I) or the protrusion shapes contained in the second member (II) have a height of 2.0 mm or less. If having such a thickness, the molded product can satisfy the required thinness requirement while maintaining lightweightness. From this point of view, it is more preferable that both the protrusion shapes contained in the first member (I) and the protrusion shapes contained in the second member (II) have a height of 2.0 mm or less.

For the molded product according to the present invention, it is preferable for the threads of the reinforcing fiber (a1) to be discontinuous with each other and to be in the form of monofilaments that are dispersed randomly. Being in such a dispersed state, they can serve to form a molded product of a complicated shape that has good isotropic mechanical characteristics.

For the molded product according to the present invention, it is preferable for the reinforcing fiber (a1) to be carbon fiber. The use of such reinforcing fiber serves to achieve both lightweightness and high rigidity.

For the molded product according to the present invention, it is preferable for the matrix resin (a2) to be at least one thermoplastic resin selected from the group consisting of polyamide resin, polypropylene resin, polyester resin, polycarbonate resin, polyphenylene sulfide resin, and polyether ether ketone resin. The use of such a thermoplastic resin can serve to produce a molded product that has high moldability and meets intended purposes.

The present invention also provides a unified molded product that is composed mainly of the molded product according to the present invention joined with a third member (III) formed of other structural members.

The present invention also provides a unified molded product that is composed mainly of the molded product according to the present invention working as a face plate and a third member (III) having a frame part, with the face plate and the frame part unified with each other, and that can be used in electric/electronic instruments, office automation equipment, home electric appliances, medical care equipment, automobile parts, aircraft parts, and building materials.

To solve the above problems, furthermore, the present invention provides a production method for the molded product according to the present invention described above in which for the purpose of obtaining the first member (I), a preform containing a fiber-reinforced resin layer (X) having a density parameter p, which will be defined later, of $2 \times 10^4$ or more and $1 \times 10^8$ or less and a fiber-reinforced resin layer (Y) having a density parameter p of $1 \times 10^1$ or more and not more than 0.1 times the density parameter of the fiber-reinforced resin layer (X) is press-molded using a mold half that has a concave shape to form a protruding core part and an opposite mold half that mates with the former.

For the production method for the molded product according to the present invention, the use of a preform containing a plurality of fiber-reinforced resin layers having a density parameter in a specific range permits easy production of a first member (I) in an intended shape, leading to an increased flexibility of design for manufacture of molded products to ensure easy production of molded products that meet intended purposes. Here, the density parameter is an indicator of the degree of fiber interference and the flowability of the fiber-reinforced resin layer increases with a decrease in the density parameter.

For the production method for the molded product according to the present invention, it is preferable to use a preform in which the fiber-reinforced resin layer (X) and the fiber-reinforced resin layers (Y) are stacked one on top of the other. Stacking resin layers that differ in flowability ensures an increased flexibility of design, allowing fiber-reinforced resins with different functions to be arranged properly.

## ADVANTAGEOUS EFFECT OF THE INVENTION

According to the present invention, reinforcing fibers extend penetratingly through the boundary surface between a surface layer part and a core part and accordingly, a protruding core part with high reinforcing effect can be produced. Thus, a molded product that has a high rigidity can be produced as a result of the existence of the core part, which allows joining surfaces, which work as weak points when external forces are applied, to be reduced and/or located in the central surface. Furthermore, the core part forms a hollow structure and accordingly, serves to produce a molded product that meets the lightweightness requirement while maintaining rigidity.

**BRIEF DESCRIPTION OF THE DRAWINGS**

Fig. 1 is a schematic oblique perspective view illustrating an example of the molded product according to the present invention (part of the surface of the second member (II) is not shown).

Fig. 2 is a schematic cross-sectional view illustrating reinforcing fibers extending penetratingly through the boundary surface between a surface layer part and a core part.

Fig. 3 is a schematic view illustrating an example of the dispersed state of the reinforcing fiber in the fiber-reinforced resin.

Fig. 4 gives schematic views illustrating an example of a burn-off jig used to measure the two-dimensional orientation angle of fiber-reinforced resin. A state before burn-off treatment (Fig. 4-a) and a state after burn-off treatment (Fig. 4-b).

Fig. 5 is a schematic cross-sectional view illustrating a thread of reinforcing fiber extending penetratingly through the boundary surface between a surface layer part and a core part.

Fig. 6 is a schematic cross-sectional view illustrating an example of a hollow structure (the molded product given in Fig. 1 looked from direction A).

Fig. 7 is a schematic view illustrating an example of the projected area of the hollow structure.

Fig. 8 is a schematic oblique perspective view illustrating the projected area of the surface layer part and the projected area of the core part.

Fig. 9 is a schematic view illustrating an example of the shape of the largest projected area of a hollow structure.

Fig. 10 is a schematic view illustrating an example of the shape of the largest projected area of a hollow structure.

Fig. 11 is a schematic cross-sectional view illustrating an example of the shape of the core part.

Fig. 12 is a schematic cross-sectional view and a schematic cross-sectional view of a mold half having a concave shape.

Fig. 13 is a schematic oblique perspective view of an example of the first member (I) in which a surface layer part and a core part are unified.

Fig. 14 is a schematic oblique perspective view of an example of a unified molded product in which the molded product and third member (III) are unified.

Fig. 15 is a schematic view of dispersed bundles of reinforcing fiber.

Fig. 16 is a schematic view illustrating the requirement for fiber bundles for the present invention.

Fig. 17 is a schematic view illustrating the method for measuring the number of monofilaments constituting a flow unit for the present invention.

Fig. 18 is a schematic oblique perspective view illustrating examples of fiber-reinforced resin layers.

Fig. 19 is a schematic oblique perspective view illustrating an example of a stacked state of fiber-reinforced resin layers.

Fig. 20 is a schematic view of a mold illustrating the projected plane of the core part.

Fig. 21 is a schematic view of the projected plane of the surface layer part of the first member (I).

Fig. 22 is a schematic oblique perspective view illustrating the evaluation method for the number of reinforcing fibers.

Fig. 23 is a schematic oblique perspective view illustrating samples of the surface layer part (a) and the core part (b) taken out of a molded product.

Fig. 24 is a schematic view illustrating an example of an apparatus for producing a papermaking substrate.

Fig. 25 is a schematic oblique perspective view illustrating an example of the stacked configuration of continuous carbon fiber prepreg plates in Example.

Fig. 26 is a schematic oblique perspective view illustrating an example of the stacked configuration for unifying the first member (I) and the second member (II) in Example.

Fig. 27 is a schematic view illustrating the method for unifying the first member (I) and the second member (II) prepared in Example 5.

Fig. 28 is a schematic view of a stamping mold used to produce square vacancies in Example 6.

Fig. 29 is a schematic view of a stamping mold used to produce circular vacancies in Example 7.

Fig. 30 is a schematic view illustrating the method used to produce a unified molded product in Example 12.

Fig. 31 is a schematic oblique perspective view illustrating the stacking of a surface layer part and a honeycomb core in Comparative example 1.

**DESCRIPTION OF PREFERRED EMBODIMENTS**

The molded product according to the present invention is described in detail below with reference to drawings. It should be understood, however, that the invention is not construed as being limited to the drawings.

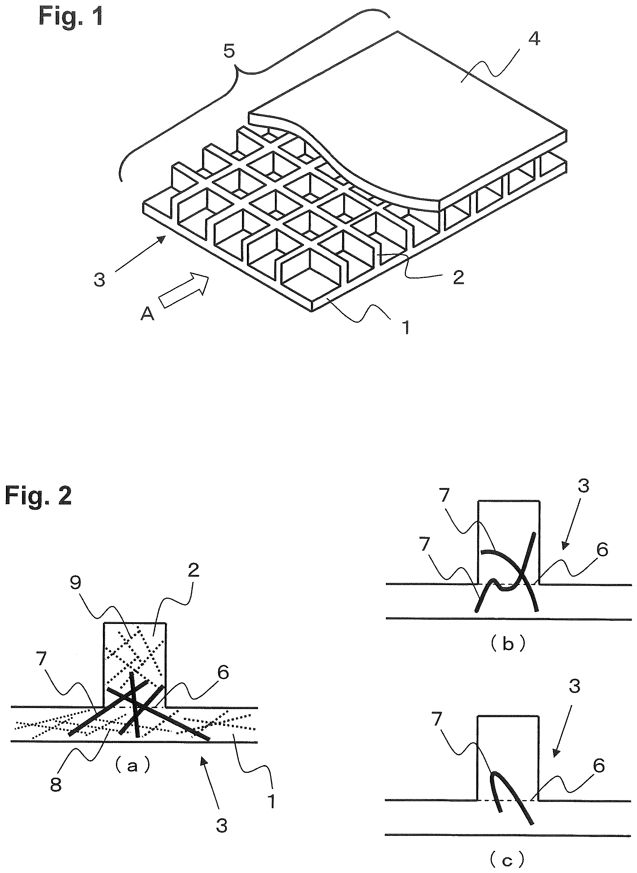

The molded product according to the present invention is a molded product having a first member (I) that contains a planar surface layer part and a protruding core part, and a second member (II) that is unified therewith so that the core part forms a hollow structure, as shown in Fig. 1.

The first member (I) is formed of fiber-reinforced resin (A) composed mainly of a reinforcing fiber (a1) and a matrix resin (a2).

For the present invention, it is highly preferable that the reinforcing fiber (a1) be carbon fiber, which is high in specific modulus and specific strength, because it is necessary to produce a molded product that is lightweight and high in rigidity. As the fiber reinforcement, fiber materials other than carbon fiber are also available including glass fiber, aramid fiber, boron fiber, PBO fiber, high strength polyethylene fiber, alumina fiber, and silicon carbide fiber, which may be used as a mixture of two or more thereof. These reinforcing fiber materials may be surface-treated. Useful surface treatment methods include metal cladding treatment, treatment with a coupling agent, treatment with a sizing agent, and attachment of an additive.

The reinforcing fiber may be in the form of, for instance, long fibers paralleled in one direction, single tow, woven fabric, knit fabric, nonwoven fabric, mat, or braid. Unidirectional prepreg is preferred because fibers are aligned in one direction without significant winding, thereby ensuring a high strength capacity factor in the fiber direction. It is also preferable to use, as fiber substrate, a plurality of unidirectional prepreg plates stacked in an appropriate layer structure because the elastic modulus and strength can be controlled freely in different directions. The use of fabric prepreg is also preferable because materials with low anisotropy in strength and elastic modulus can be obtained. It is also possible to combine different types of prepreg plates, such as unidirectional prepreg and fabric prepreg, to form a fiber substrate.

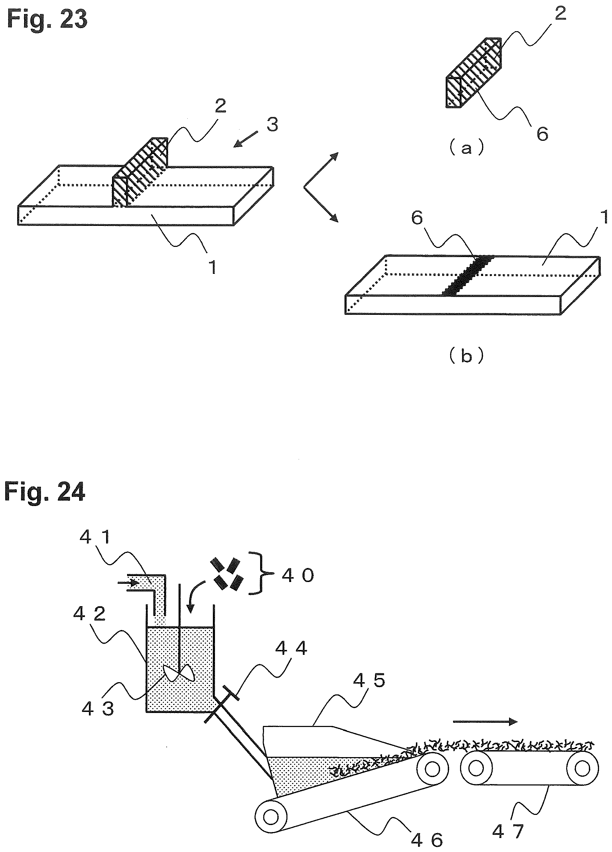

For the present invention, it is important for these threads of reinforcing fiber to extend penetratingly between the surface layer part and the core part. The term "surface layer part" used herein refers to the part numbered 1 (the planar surface layer part) that is a component of the first member (I) numbered 3 shown in Fig. 1. The term "core part" used herein refers to the part numbered 2 (the protruding core part) that is a component of the first member (I) numbered 3 shown in Fig. 1. The expression "extend penetratingly" used herein refers to a state in which one thread of reinforcing fiber penetrates the boundary surface between the surface layer part and the core part as shown in Fig. 2. The thread of reinforcing fiber may run straight, in a curve, or in an arc. If such threads of reinforcing fiber are dispersed randomly as described later, they may cross each other in a complicated manner to ensure more effective reinforcement of the core part. The term "boundary surface" used herein refers to the boundary surface 6 where the planar surface layer part 1 and the protruding core part 2 mate with each other. In Fig. 23, for example, the black portion where the surface layer part 1 and the core part 2 mate with each other is the boundary surface 6.

It is also important that while extending penetratingly between the surface layer part and the core part, 400 or more threads per square millimeter penetrate through the boundary surface between the surface layer part and the core part. This number of threads of reinforcing fiber is preferably 700 per square millimeter or more, more preferably 1,000 per square millimeter or more. This number of threads of reinforcing fiber is preferably as large as possible from the viewpoint of reinforcement of the boundary surface between the surface layer part and the core part, but in order to maintain both rigidity and lightweightness and from the viewpoint of moldability, it is preferably 10,000 threads/mm$^2$ or less. If the number of threads of reinforcing fiber is less than 400 per square millimeter, their effect on reinforcement of the core part will be small, possibly leading to breakage of the bottom of the protruding core part if an external force is applied.

It is also important for the reinforcing fiber (a1) according to the present invention to have a number-average fiber length Ln of 1 mm or more. This fiber length Ln is preferably 2 mm or more, more preferably 3 mm or more. In regard to the upper limit of the fiber length Ln, the moldability can deteriorate if the fiber length is too large, and accordingly, it is preferably 30 mm or less, more preferably 15 mm or less.

Of these various forms of reinforcing fiber, it is also important for the reinforcing fiber to be in the form of discontinuous monofilaments that are dispersed randomly. The expression "dispersed randomly" used herein means that the average value of the random orientation angle measured by the method described later is in the range of 10 to 80 degrees. The random orientation angle is preferably in the range of 20 to 70 degrees, more preferably in the range of 30 to 60 degrees, and still more preferably as close to 45 degrees, which is the ideal angle, as possible. If the average value of the random orientation angle is less than 10 degrees or more than 80 degrees, it means that many of the thread of reinforcing fiber are in the form of bundles, which may lead to a deterioration in mechanical characteristics, decrease in isotropy, or the existence of a significant number of threads of reinforcing fiber in the thickness direction to cause an increase in the economic burden of the layer stacking step.

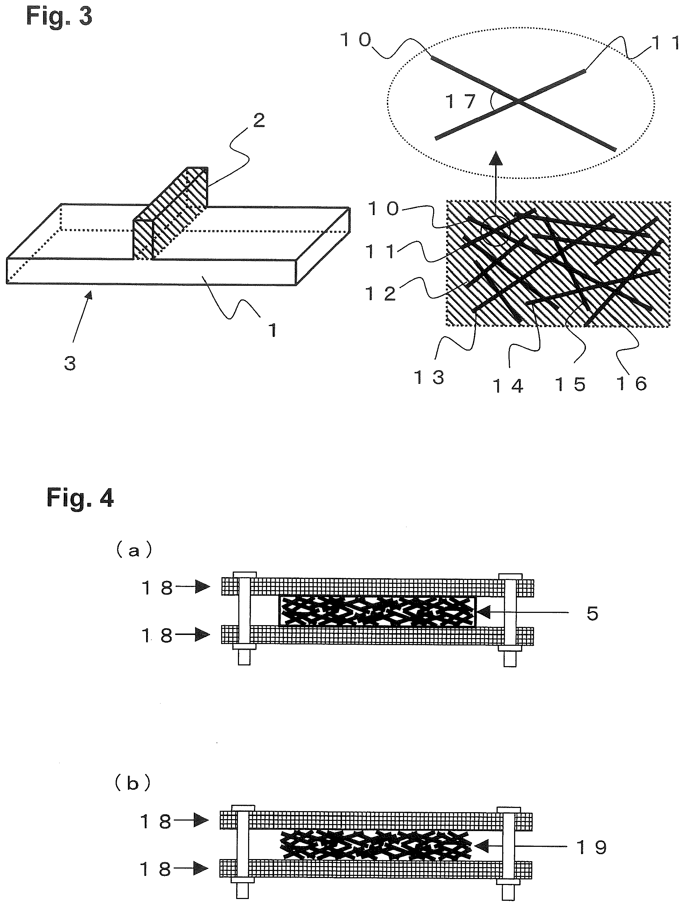

Here, the random orientation angle formed between a reinforcing monofilament (1) and another reinforcing monofilament (m) that crosses the reinforcing monofilament (1) is described with reference to Fig. 3. In regard to an example of the randomly dispersed reinforcing fiber (a1), Fig. 3 gives a schematic view illustrating the dispersed state of the threads of the reinforcing fiber, where only threads of the reinforcing fiber are seen in the plane direction. When looking at the reinforcing monofilament 10, the reinforcing monofilament 10 crosses the reinforcing monofilaments 11 to 16. Here, the term "crossing" means that the reinforcing monofilament (1) identified in an observed plane appears to cross another reinforcing monofilament (m). In the actual fiber-reinforced resin, the reinforcing fiber 10 is not necessarily in contact with the reinforcing fiber 11 to 16. The random orientation angle is defined as one of the two angles formed between the two reinforcing monofilaments that is in the range of 0 degrees or more and 90 degrees or less, that is, the angle 17.

Specifically, methods available for determining the average value of the random orientation angle from fiber-reinforced resin include, for example, observing the orientation of the reinforcing fiber from the surface of the fiber-reinforced resin. This method is preferable because the reinforcing fiber can be observed more clearly if the surface of the fiber-reinforced resin is polished to expose the fiber. In addition, another method is observing the orientation of the reinforcing fiber by applying a light beam that penetrates through the fiber-reinforced resin. This method is preferable because the reinforcing fiber can be observed more clearly by using a thin slice of the fiber-reinforced resin. Still another method is transmissive observation of the fiber-reinforced resin by X-ray CT to photograph the image of the oriented reinforcing fiber. This method is preferable for observing reinforcing fiber that is high in radiolucency because the reinforcing fiber can be observed more clearly if a tracer material is contained in the reinforcing fiber or if the reinforcing fiber is coated with a tracer material.

From the viewpoint of simplification of work procedures, a preferable method is to remove the resin while maintaining the structure of the reinforcing fiber, followed by observing the orientation of the reinforcing fiber. As shown in Fig. 4(a), for example, a sample of a molded product is sandwiched between two stainless steel mesh sheets and fixed with screws etc. to prevent the molded product from moving and then the resin component is burnt off or dissolved, followed by observing and examining the resulting reinforcing fiber (Fig. 4(b)) by optical microscopy or electron microscopy.

For the present invention, the average value of the random orientation angle should be measured in steps (1) and (2) described below.

(1) A reinforcing monofilament (1) (the reinforcing monofilament 10 in Fig. 3) is selected randomly and the random orientation angle is measured for all reinforcing monofilaments that cross it (reinforcing monofilaments 11 to 16 in Fig. 3), followed by determining the average value. If the number of reinforcing monofilaments that cross the reinforcing monofilament (1) is too large, 20 reinforcing monofilaments that cross the former may be selected randomly and the average value determined for them may be adopted.

(2) Other reinforcing monofilaments are selected and the measuring procedure in step (1) above is repeated a total of five times and the measurements are averaged to provide the average value of the random orientation angle.

The matrix resin to be used may be a thermosetting resin selected from the group of thermosetting resins described later or a thermoplastic resin selected from the group of thermoplastic resins described later.

The matrix resin (a2) to be used for the present invention may be one of the thermosetting resins listed below and preferable ones include unsaturated polyester resin, vinyl ester resin, epoxy resin, phenol (resol type) resin, urea-melamine resin, and polyimide resin. Copolymers and modified compounds thereof and/or resin blends of two or more thereof may also be applied.

Thermoplastic resins that can be used as the matrix resin (a2) for the present invention include, for example, those listed below: polyester based resins such as polyethylene terephthalate (PET) resin, polybutylene terephthalate (PBT) resin, polytrimethylene terephthalate (PTT) resin, polyethylene naphthalate (PENp) resin, and liquid crystal polyester; polyolefin resins such as polyethylene (PE) resin, polypropylene (PP) resin, and polybutylene resin, and others such as styrene based resin, urethane resin, polyoxy methylene (POM) resin, polyamide (PA) resin, polycarbonate (PC) resin, polymethyl methacrylate (PMMA) resin, polyvinyl chloride (PVC) resin, polyphenylene sulfide (PPS) resin, polyphenylene ether (PPE) resin, modified PPE resin, polyimide (PI) resin, polyamide-imide (PAI) resin, polyetherimide (PEI) resin, polysulfone (PSU) resin, modified PSU resin, polyethersulfone (PES) resin, polyketone (PK) resin, polyether ketone (PEK) resin, polyether ether ketone (PEEK) resin, polyether ketone ketone (PEKK) resin, polyallylate (PAR) resin, polyether nitrile (PEN) resin, phenolic resin, phenoxy resin, polytetrafluoroethylene, and other fluorine based resins, as well as copolymers and modified products thereof and resin blends of two or more thereof. In particular, more preferable ones to be used as the matrix resin (a2) include PPS resin and PEEK resin from the viewpoint of heat resistance and chemical resistance; polycarbonate resin from the viewpoint of appearance and dimensional stability of molded products; polyamide resin and polyester resin from the viewpoint of the strength and impact resistance of molded products; and polypropylene resin from the viewpoint of lightweightness.

To the thermosetting resins and thermoplastic resins given above, impact resistance improving agents, such as elastomers and rubber components, and other fillers and additives may be added unless the effects of the present invention are impaired. Their examples include inorganic fillers, flame retardants, electric conductivity developing agents, crystal nucleating agents, ultraviolet absorbers, antioxidants, vibration damping agents, antibacterial agent, insecticides, deodorants, color protection agents, thermal stabilizers, mold releasing agents, antistatic agents, plasticizers, lubricants, coloring agents, pigments, dyes, foaming agents, bubble control agents, and coupling agents.

In the first member (I) of the molded product according to the present invention, the homogenization of the surface layer part and the core part is preferably 70% or more. The term "homogenization" used herein refers to the proportion of the weight packing rate of the reinforcing fiber existing in the core part to the weight packing rate of the reinforcing fiber existing in the surface layer part. The homogenization is more preferably 80% or more and still more preferably as close to 100%, that is, the ideal value, as possible, which means that the weight packing rate in the surface layer part is most preferably equal to the weight packing rate in the core part. If the homogenization is less than 70%, the core part is not sufficiently filled with reinforcing fiber and accordingly works as a weak point in the molded product, leading to a decrease in the rigidity of the molded product.

For the reinforcing fiber (a1) according to the present invention which extends penetratingly between the surface layer part and the core part, it is preferable that the fiber length rate Lp, which will be defined later, be 30% to 50% and that at the same time, the fiber reinforced rate, which will be defined later, be 10 or more. The term "fiber length rate" used herein refers to the proportion of the length of that segment of a thread of reinforcing fiber which extends either in the surface layer part or in the core part from the boundary surface between them, whichever the shorter. In this instance, equation (1) given below is used if the length relation between the length Lr ($\mu$m) of that segment of the thread which exists in the core part and the length Lf ($\mu$m) of that segment of the thread which exists in the surface layer part is as represented by Lr $\leq$ Lf or equation (2) given below is used if it is as represented by Lr > Lf.

[Formula 1]

$$\text{Fiber length rate Lp} = \{Lr / (Lr + Lf)\} \times 100 \quad \dots (1)$$

[Formula 2]

$$\text{Fiber length rate Lp} = \{Lf / (Lr + Lf)\} \times 100 \quad \dots (2)$$

The fiber length rate is more preferably 40% or more, still more preferably as close to 50% as possible, where 50% means that the thread of reinforcing fiber crosses the boundary surface between the surface layer part and the core part at the center of the thread, permitting effective reinforcement of the core part. The term "fiber reinforced rate" used herein refers to the length of that segment of the thread of reinforcing fiber which exits either in the surface layer part or in the core part. As in the case of the fiber length rate, it is defined for that segment of the thread which exits either in the surface layer part or in the core part, whichever the shorter, and equation (3) given below is used when Lr $\leq$ Lf while equation (4) given below is used when Lr > Lf.

[Formula 3]

$$\text{Fiber reinforced rate Fr} = \{Lr \times (Lp / 100)\} \times 100 \quad \dots (3)$$

[Formula 4]

$$\text{Fiber reinforced rate Fr} = \{Lf \times (Lp / 100)\} \times 100 \quad \dots (4)$$

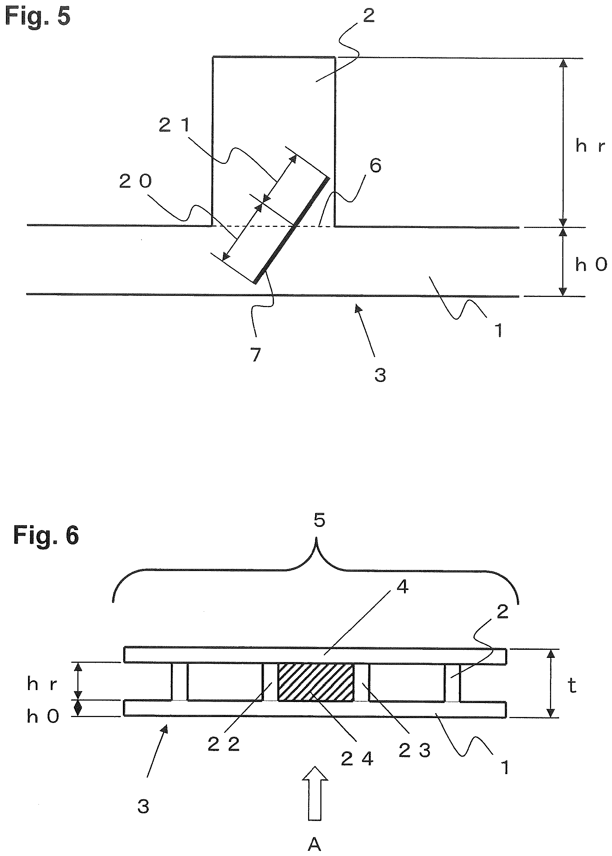

To ensure effective reinforcement, the fiber reinforced rate Fr is more preferably 20 or more and particularly preferably 50 or more. From the viewpoint of moldability, the fiber reinforced rate is preferably 500 or less. If it is less than 10, it means that either that segment of the reinforcing fiber existing in the surface layer part or that in the core part is so short that the core part cannot be reinforced effectively. As illustrated in Fig. 5, a thread of reinforcing fiber extending across the boundary surface 6 between the surface layer part and the core part is selected randomly, and the length Lr in the core part from the boundary surface 6 is measured while the length Lf in the surface layer part from the boundary surface 6 is also measured by the same method. The fiber length can be observed and measured by the same method as used for the observation of the two-dimensional orientation angle described above.

In a molded product produced from the first member (I) that contains a core part reinforced with reinforcing fiber as described above, the core part is so strong as to resist external forces such as bending force and serve to increase the rigidity of the entire molded product. The degree of reinforcement of the core part can be evaluated based on measurements of the shear strength of the core part that will be defined later.

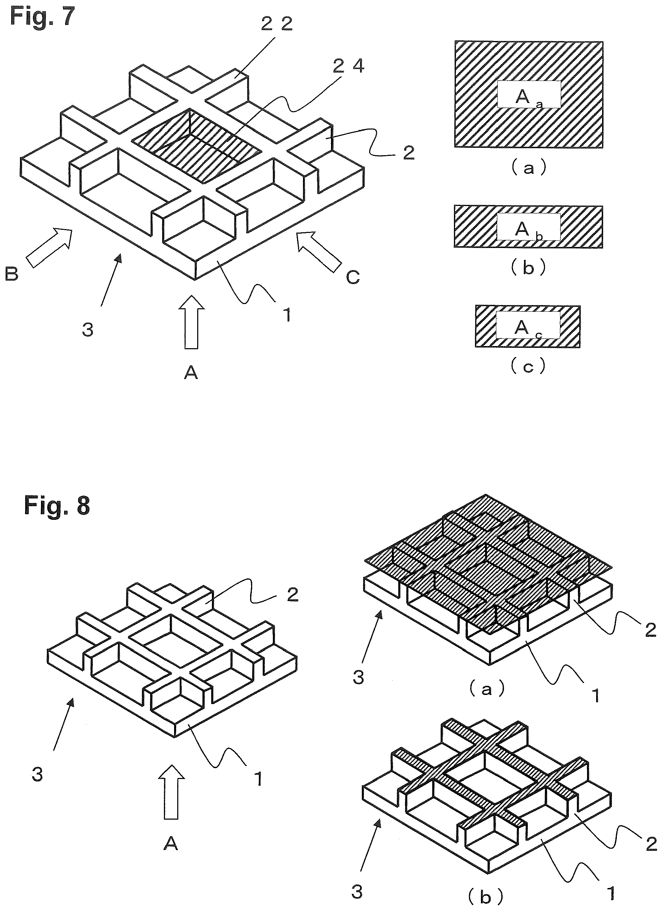

The term "hollow structure" used for the present invention refers to a structure as illustrated in Fig. 6 that contains a vacancy 24 formed by the surface layer part, protruding shape 22, and protruding shape 23 of the first member (I) 3 and the surface layer part of the second member (II) 4. Different types of protruding shapes including planar, curved, and waved, can be used and different hollow structures are formed by combining these protruding shapes. The expression "the largest projected plane" of a hollow structure used for the present invention refers to the plane having the maximum area that is formed by projecting the hollow structure shown in Fig. 7 (for example, Aa in Fig. 7). The term "projected plane" used for the present invention refers to what is seen when looked from the perpendicular direction to the surface layer part of the first member (I) (for example, the direction indicated by arrow A in Fig. 7) and, as compared thereto, also refers to the projected planes that are seen when looked from parallel directions at the molded product or the first member (I) as they are rotated through 90 degrees (for example, the directions indicated by arrow B or arrow C in Fig. 7). In the case of a shape without a planar portion, such as a sphere, the circle formed as a projected plane has the largest area, that is, the largest projected plane occurs at a position where the diameter reaches a maximum. If there are a plurality of largest projected planes, the one that is perpendicular to the direction of the likely external forces supposed to occur on the molded product is adopted as the largest projected plane of the hollow structure.

For the present invention, the projected area of the core part preferably accounts for 5% to 80% of the projected area of the surface layer part, more preferably in the range of 20% to 60% from the viewpoint of maintaining both rigidity and lightweightness. If the proportion of the projected area of the core part is less than 5%, the molded product will suffer a decline in mechanical characteristics, such as increased vulnerability of the core part, whereas if it is more than 80%, the vacancies will decrease, leading to a deterioration in lightweightness. The terms "the projected area of the surface layer part" and "the projected area of the core part" used for the present invention refer to observations taken from the perpendicular direction to the surface layer part and in Fig. 8, the projected area of the surface layer part is the hatched region (a) while the projected area of the core part is the hatched region (b). To determine the projected areas of these parts, useful methods include, for example, one in which an image of the surface of the core part is observed with a scanner and binarized to determine the area of the core part, one in which the width and length of the core part are measured with a micrometer or calipers, followed by calculation, and one in which the area of the core part is calculated from the area of the vacancy formed by the core part.

The second member (II) according to the present invention may be one formed of a thermosetting resin or thermoplastic resin or one formed of a fiber-reinforced resin containing reinforcing fiber and from the viewpoint of rigidity of the molded product, it is preferably one having a protruding core part similar to the first member (I). Joining and bonding members that have the same shape allows the joining surface, which can act as a weak point, to be located in the central surface (neutral axis) of the molded product. It is only necessary to prepare members of an identical shape and it serves to reduce the costs for producing required members.

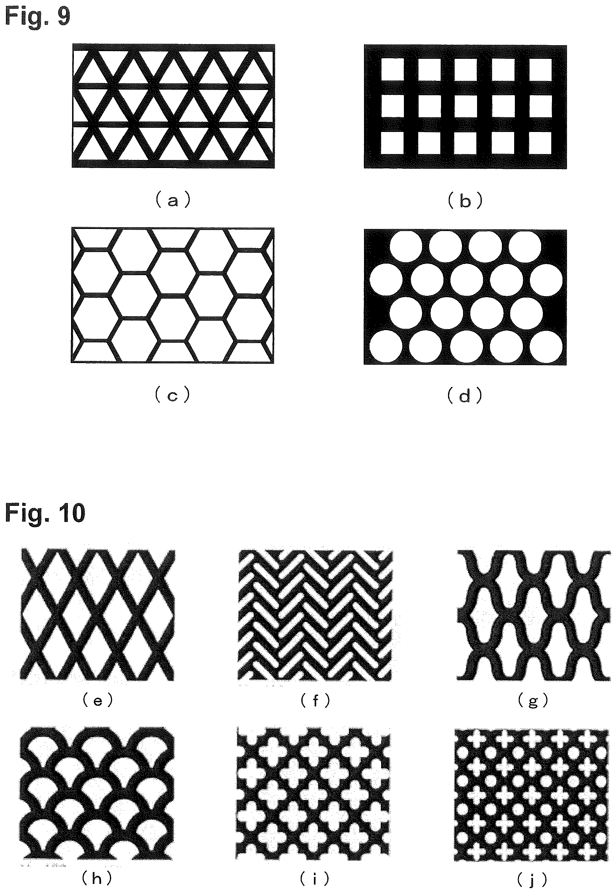

The largest projected plane of a hollow structure that is formed in the core part by the protruding shapes according to the present invention may have any of various shapes including polygons (such as triangle, square, and hexagon shown in Fig. 9(a), (b), and (c), respectively), perfect circle (as shown in Fig. 9(d)), ellipse, indeterminate form states, over-wiring shape (OX), hanging bell shape (flexible), bisect, feather, and diamond (Fig. 10(e)), herringbone (Fig. 10(f)), deformed "+" shape (Fig. 10(g)), sector (Fig. 10(h)), "+" shape (Fig. 10(i)), and combination of "o" and "+" (Fig. 10(j)), and its shape may be one of the former or a combination of a plurality of them which may have different sizes. In particular, in view of mechanical strength and suitability for mass production, the shape is preferably at least one of the following: circle, ellipse, rhombus, equilateral triangle, square, rectangle, and regular hexagon.

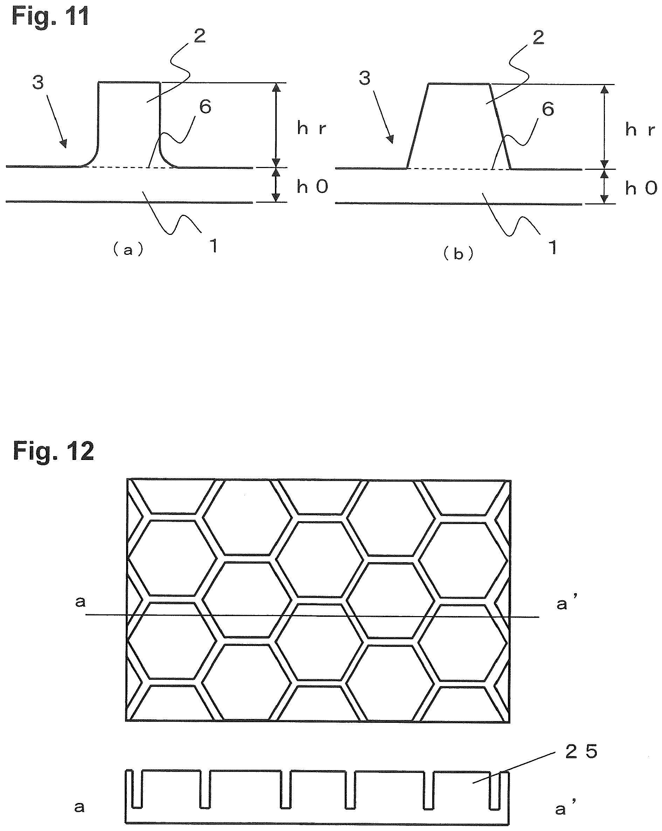

The height-directional cross section of the core part may have, for example, a fillet shape (a) that broadens at the bottom like the foot of a mountain or a tapered shape (b) that slants from top to bottom as shown in Fig. 11.

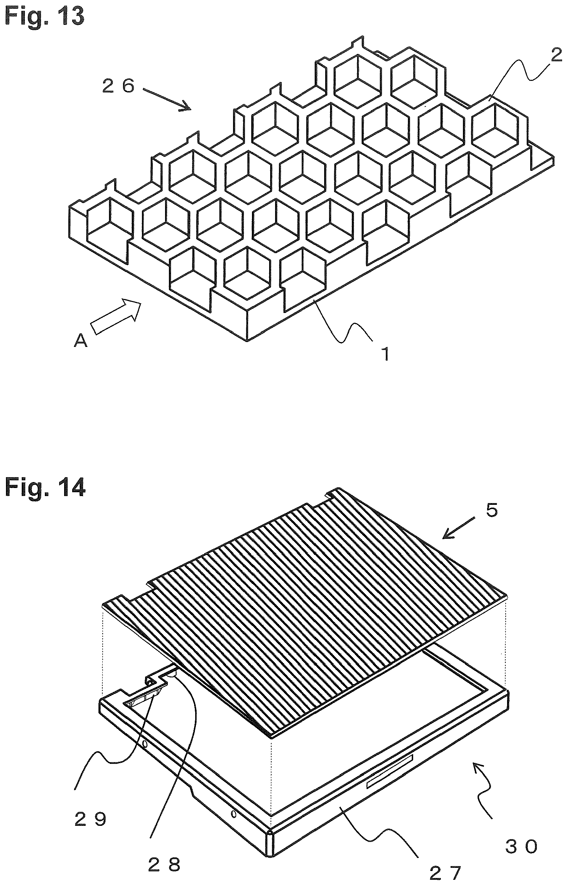

The protruding shapes in the molded product preferably contain fiber-reinforced resin formed of at least a reinforcing fiber (a1) and a matrix resin (a2) selected from the groups given previously. The protruding shapes can be produced from fiber-reinforced resin by a molding method such as press molding, injection molding, and RTM molding using a concave mold as shown in Fig. 12. From the viewpoint of providing a molded product with high rigidity and shortening the molding process, it is preferable to produce a unified body consisting of a surface layer part and a core part as shown in Fig. 13, instead of producing protruding shapes independently, by a generally known method.

The protruding shapes in a molded product preferably have a height of 2.0 mm or less, more preferably 1.5 mm or less, and particularly preferably 1.0 mm or less. The term "height of the protruding shapes" used herein refers to the height hr shown in Fig. 6, that is, the distance from the boundary surface (numbered 6 in Fig. 5) between the surface layer part and the core part to the ends of the core part (length of the part 2, indicated by an arrow, in Fig. 5) in the first member (I). The possession of protruding shapes of such a height allows the molded product to have an increased thickness while maintaining lightweightness and also allows the molded product to have an increased rigidity. In regard to the lower limit of the height of the protruding shapes, the height is preferably 0.3 mm or more, more preferably 0.5 mm or more, and particularly preferably 0.8 mm or more from the viewpoint of improved lightweight and rigidity. It is also preferable that the height hr (mm) of the core part meet the relation $hr \geq 3 \times h0$ where h0 (mm) denotes the thickness of the surface layer part that is joined with the core part. Available methods for measuring the thickness h0 of the surface layer part of the first member (I) include the use of existing means of measurement including, for example, calipers, micrometer, laser displacement gauge, and camera to photograph the thickness. A preferable method for simple and accurate measurement is to leave the molded product to stand for 10 minutes in an atmosphere of a temperature of 23°C and then measure the thickness of the face plate with a micrometer at randomly selected 10 positions located at intervals of about 100 mm, followed by calculating the average to give a value to represent the thickness the face plate. The height of the core part should be as large as possible in order to enhance the effect in reinforcing the molded product and preferably meets the relation hr ≥ 3 × h0. In regard to the upper limit of the height of the core part, when the core part is formed, for example, as result of antiplane flowing of material out of the surface layer part in the course of press molding, there will be a limit to the quantity of material that can flow into the core part from the surface layer part if it is not thick enough and accordingly, the thickness hr is commonly not more than 50 times the thickness h0. A core part will be difficult to mold if it is too tall, but moldability and surface layer part reinforcing effect can be ensured by using a plurality of low core parts.

(Molded product)

From the viewpoint of its applicability to the intended uses of the present invention, the molded product according to the present invention preferably has a maximum plate thickness of 3.0 mm or less, more preferably 2.0 mm or less. The term "maximum thickness" used herein refers to the thickness t of the thickest portion of the molded product as shown in Fig. 6, which does not include those portions in which such shapes as unevenness and protrusions are provided intentionally.

From the viewpoint of improved lightweightness, the molded product according to the present invention preferably has a specific gravity of 1.0 or less, more preferably 0.8 or less. In general, the specific gravity of a vacancy-containing molded product such as the one according to the present invention refers to its apparent specific gravity (bulk specific gravity), which includes the weight and volume of the vacancy existing in the molded product. To determine the specific gravity of such a molded product, the apparent volume of the molded product is calculated by method A (immersion method) described in JIS-K 7112, followed by calculating the apparent specific gravity. If in this instance, the specific gravity of the molded product is 1.0 or less and evaluation cannot be performed by using water, then a liquid with specific gravity of less than 1.0, such as ethanol, may be used as immersion liquid. If such a liquid other than water is used as immersion liquid, it is necessary to measure the density of the immersion liquid elsewhere and this measurement can be performed by a generally known evaluation method such as the use of a pycnometer. If the specific gravity is as low as less than 1.0 and cannot be measured even by using such a liquid as ethanol, a useful method is to measure the weight of the molded product using a precision balance, measure the length, width, and thickness of the molded product using calipers or micrometer, calculate the volume from the measurements, and divide the weight of the molded product by the volume of the molded product to determine the specific gravity of the molded product.

(Unified molded product)

As seen in Fig. 14, the unified molded product according to the present invention consists of a molded product as described above and a third member (III) that is joined to the molded product. To produce a unified molded product of a complicated shape, a molded product of, for example, planar shape is combined with a third member (III) that has a shape changing along the thickness direction, thereby providing a body of a complicated shape. A planar shape as referred to herein means that a major part of the projected area of a molded product is composed of a flat plane or a gentle curved plane as typically seen in Fig. 14. A planar shape, for example, may contain a curved portion with a curvature radius of 1,000 m or less and one plane of a molded product may contain a plurality of such curved portions arranged in a discontinuous or dispersed manner. Such a plane may contain a wrung portion with a curvature radius of 5 mm or more. A plane as a whole may be in a three dimensional form consisting of a plurality of such curved portions.

The third member (III), on the other hand, is unified with a molded product to provide a unified molded product of a complicated shape. Complicated shapes as referred to herein are those having thickness variation in the width, depth, and height directions such as for structural working parts, geometrically designed portions, and intentionally formed protrusions and recesses. Typical ones include frames, rising walls, hinges, and boss ribs, such as the third member (III) in Fig. 14. To produce a third member (III), it is preferable to use a method suitable for mass production and efficient manufacture as compared to those used for the molded product.

For the third member (III), preferred materials include appropriate thermosetting resins selected from the above-mentioned group of thermosetting resin, appropriate thermoplastic resins selected from the above-mentioned group of thermoplastic resins, cement, concrete, fiber reinforced materials thereof, wood, metal-based materials, paper-based materials. Specifically, thermoplastic resins are preferred from the viewpoint of moldability, fiber reinforced thermoplastic resins preferred from the viewpoint of improvement in mechanical characteristics, and metal-based materials preferred from the viewpoint of further improvement in mechanical characteristics of the molded product despite being inferior in lightweightness. In particular, the use of a thermoplastic resin composition composed of discontinuous reinforcing fibers dispersed in thermoplastic resin is highly preferable in order to ensure high mass productivity, moldability, lightweightness, and mechanical characteristics at the same time. When carbon fiber is used as the reinforcing fiber in this case, the reinforcing fiber preferably accounts for 5 to 75 wt%, preferably 15 to 65 wt%, of the thermoplastic resin composition from the viewpoint of the balance with moldability, strength, and lightweightness.

In the unified molded product according to the present invention, it is preferable for the molded product to be the major component. Specifically, it is preferable for 50% or more of the projected area of a unified molded product to be accounted for by the molded product, and it is more preferable for 70% or more of the projected area to be accounted for by the molded product.

For the production of the unified molded product according to the present invention, available unification methods include, for example, the use of an adhesive for their unification and the use of bolts and screws for their unification. For unification with a thermoplastic member, preferred methods include heat welding, vibration welding, ultrasonic welding, laser welding, insert injection molding, and outsert injection molding. Insert molding and outsert molding are preferred from the viewpoint of the molding cycle.

Examples of the applications of the molded product according to the present invention and unified molded products produced therefrom include, for example, parts, components, and cases of electric or electronic instruments such as various gears, various cases, sensors, LED lamps, connectors, sockets, resistors, relay cases, switches, coil bobbins, capacitors, optical pickups, vibrators, various terminal plates, transformers, plugs, print wiring plates, tuners, speakers, microphones, headphones, small motors, magnetic head bases, power modules, semiconductors, displays, FDD-carriages, chassis, HDDs, MOs, motor brush holders, parabolic antennas, notebook computers, portable telephones, digital still cameras, PDAs, portable MDs, and plasma displays; parts, components, and cases of home or office products such as telephones, facsimiles, VTRs, copiers, TVs, irons, hair driers, rice cookers, microwave ovens, audio instruments, cleaners, toiletry products, laser disks (registered trademark), compact discs, lighting systems, refrigerators, air conditioners, typewriters, and word processors; parts, components, and cases of amusement machines and entertainment products such as pinball machines, slot machines, and game machines; parts, components, and cases of precision machines and optical instruments such as microscopes, binoculars, cameras, and clocks; medical instruments such as X-ray cartridges; parts, components, and outer panels of automobiles and motorcycles such as motor parts, alternator terminals, alternator connectors, IC regulators, light dimmer potentiometer bases, suspension parts, exhaust gas valves, other various valves, fuel-related parts, exhaust-related or suction-related various pipes, air intake nozzle snorkels, intake manifolds, various arms, various frames, various hinges, various bearings, fuel pumps, gasoline tanks, CNG tanks, engine cooling water joints, carburetor main bodies, carburetor spacers, exhaust gas sensors, cooling water sensors, oil temperature sensors, brake pad wear sensors, throttle position sensors, crank shaft position sensors, air flow meters, brake pad abrasion sensors, air conditioner thermostat bases, heating air flow control valves, radiator motor brush holders, water pump impellers, turbine vanes, wiper motor parts, distributors, starter switches, starter relays, transmission wire harnesses, wind washer nozzles, air conditioner panel switch substrates, fuel-related electromagnetic valve coils, fuse connectors, battery trays, AT brackets, head lamp supports, pedal housing, steering wheels, door beams, protectors, chassis, frames, arm rests, horn terminals, step motor rotors, lamp sockets, lamp reflectors, lamp housings, brake pistons, noise shields, radiator supports, spare tire covers, sheet shells, solenoid bobbins, engine oil filters, ignition device cases, undercovers, scuff plates, pillar trims, propeller shafts, wheels, fenders, fasciae, bumpers, bumper beams, bonnets, aero parts, platforms, cowl louvers, roofs, instrument panels, spoilers, and various modules; aircraft related parts, components, and outer panels such as landing gear pods, winglets, spoilers, edges, ladders, elevators, fairings, and ribs; sports related parts and components such as various rackets, golf club shafts, yachts, boards, skiing equipment, fishing poles, and bicycles; artificial satellite related parts; and building materials such as panels.

Of these, they are preferred as materials that require lightweightness and high rigidity, such as for electric and electronic instruments including personal computers, displays, portable telephones, and portable information terminals, as well as office automation instruments, home electric appliances, medical care instruments, automobile parts, aircraft parts, and building materials. In particular, it is preferable to use the molded product according to the present invention as top panels (top boards) of housing that contain many plane portions, among others, because it can fully exhibit its features including thinness, lightweightness, high rigidity, and impact resistance.

It is generally known that various fiber-reinforced resins differ in flowability depending on the type, shape, arrangement, and blend proportions of the reinforcing fiber and/or the resin contained. To produce a protruding core part having ribs etc. by molding, it is preferable to use fiber-reinforced resin with high flowability, whereas it is preferable to use fiber-reinforced resin with low flowability when producing a planar surface layer part from the viewpoint of maintaining the isotropy and preventing the fiber-reinforced resin with uniform properties from flowing. As described above, appropriate fiber-reinforced resins are selected for different parts where the resins should or should not flow easily, and some methods to estimate their flowability are described below.

For the present invention, a fiber-reinforced resin sheet formed of the fiber-reinforced resin that constitutes the first member (I) is referred to as "fiber-reinforced resin layer." There are no specific limitations on the fiber-reinforced resin sheet, but its preferable forms will be described later.

First, a good method is to compare the degree of flowability of fiber-reinforced resins based on their apparent viscosity. Fiber-reinforced resins with a higher viscosity are lower in flowability. Available measuring devices for the apparent viscosity include melt flow rate meter and rheometer. Second, another method is to compare the degree of flowability based on the degree of fiber interference. In molten resin, larger restraints are imposed on different reinforcing fibers and their degree of freedom decreases with an increasing interference among the reinforcing fibers. Thus, fiber-reinforced resins with a larger degree of fiber interference are lower in the degree of flowability. A third method is to compare the degree of flowability of fiber interferences based on their extension rate. The "extension rate" as referred to herein is determined by heating a disk-like sample of a fiber-reinforced resin layer above its melting point, press-molding it, and calculating the ratio (in percentage) between the area of the fiber-reinforced resin layer measured before and after the press-molding. Fiber-reinforced resins with a lower extension rate are lower in flowability.

Of the above-mentioned methods to determine the flowability of fiber-reinforced resin, those using the fiber interference or extension rate are used here to perform comparison in flowability of fiber-reinforced resin for the present invention. First, the density parameter p, which is an indicator of the degree of fiber interference, is described below.

The "density parameter" of fiber-reinforced resin used for the present invention is an indicator of the degree of fiber interference. This parameter depends on the blending quantity, fiber length, fiber diameter, and the number of monofilaments contained in a flow unit of the reinforcing fiber and can be represented by equation (5) given below. Here, $n$ is the number of flow units of reinforcing fiber contained in a unit area (1 $mm^2$) of the fiber-reinforced resin, $h$ the thickness (mm) of the fiber-reinforced resin layer, and $Ln$ the number-average fiber length (mm) of the reinforcing fiber. [Formula 5]

$$p = \frac{n \times L\,n^2}{h} \cdots (5)$$

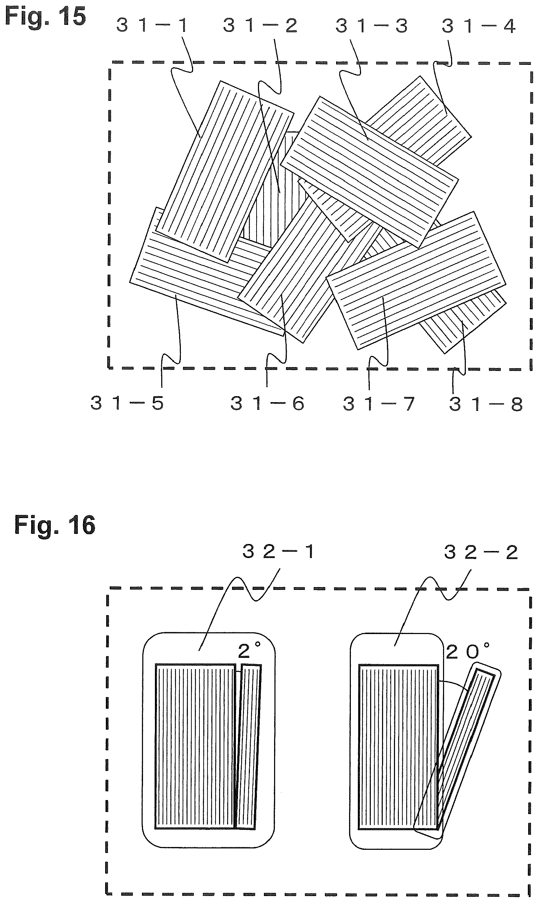

Furthermore, the number $n$ of flow units of reinforcing fiber contained in a unit area (1 $mm^2$) of the fiber-reinforced resin is calculated by equation (6) given below. Here, $Wf$ is the basis weight (weight per unit surface area) (g/$m^2$) of the reinforcing fiber contained in the fiber-reinforced resin, $d0$ the diameter ($\mu$m) of the monofilaments, $Ln$ the number-average fiber length (mm) of the reinforcing fiber, $\rho f$ the density (g/$cm^3$) of the reinforcing fiber, and $k$ the bundled average number of the flow units. The term "flow unit" used herein refers to a thread of reinforcing fiber or an aggregate of such threads. For example, each single monofilament is regarded as a flow unit in the case of reinforcing fiber in which monofilaments are dispersed as shown in Fig. 3 whereas where threads of reinforcing fiber are in the form of fiber bundles as in the case of the SMC shown in Fig. 15, each fiber bundle is regarded as a flow unit. Here, the requirement for a fiber bundle to be regarded as a flow unit is described below with reference to Fig. 16. If a fiber aggregate composed of reinforcing fiber makes an angle of 5° or less with neighboring monofilaments or fiber aggregates and substantially adjoin them, they are regarded as one fiber bundle, that is, one flow unit, and otherwise, they are regarded as independent flow units.
[Formula 6]

$$n = \frac{w\,f}{10^6} \times \frac{1}{\pi \times \left(\frac{d_0}{2}\right)^2 \times L\,n \times \rho\,f} \times \frac{1}{k} \cdots (6)$$

The parameters used to determine the density parameter are described below. Here, an unheated fiber-reinforced resin layer is assumed in calculating the parameters of a fiber-reinforced resin layer to be used to determine the density parameter. For example, as a fiber-reinforced resin layer is heated, a fiber-reinforced resin layer containing a foaming agent may expand to cause a volume change or thermoplastic resin may melt under heat to cause springback as a result of the elastic recovery of the reinforcing fiber that is released from constraint, which causes a volume change. So, a variation in the density parameter could occur even if the heating causes no substantial changes in the blend proportions of the reinforcing fiber and the thermoplastic resin. Thus, the above assumption is intended to eliminate this problem. Thus, calculations are made on the assumption that the fiber-reinforced resin layer is substantially free of voids and that the resin is completely impregnated.

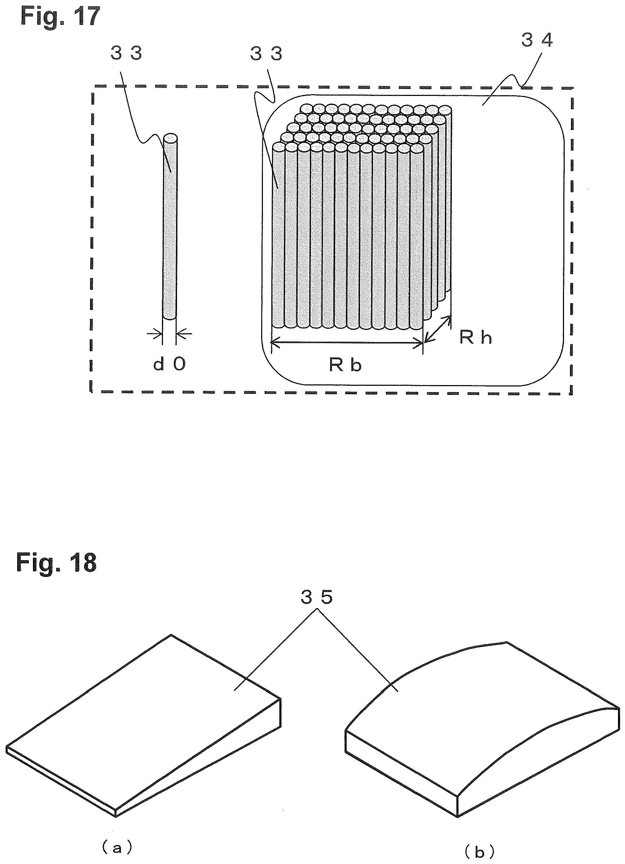

The bundled average number $k$ is described first below. The bundled average number $k$ is defined as the number of monofilaments that constitute a flow unit. Available methods to determine the bundled average number $k$ include one in which a flow unit composed of reinforcing fiber is observed and the number of monofilaments is determined directly by counting all of them and one in which the diameter $d0$ ($\mu$m) of the monofilaments is measured in advance and the number of monofilaments is roughly calculated from the width and height of the flow unit as shown in Fig. 17. If a flow unit contains a large number of monofilaments, it is preferable to use the method of calculating the parameter from the width and height of the flow unit. It is preferable to use a scanning type electron microscope (SEM) or an optical microscope to observe flow units composed of reinforcing fiber. A scanning type electron microscope (SEM) may be used for the observation of the diameter d0 of monofilaments. If the monofilaments are not perfect-circular, the average of 10 measurements taken randomly may be used. Described below is a method for removing the resin component from fiber-reinforced resin to obtain only the reinforcing fiber. Available methods include dissolving the resin with a solvent that dissolves only the resin in the fiber-reinforced resin (dissolution method) and separating the reinforcing fiber by burning off only the resin in a temperature range where the reinforcing fiber does not suffer a weight loss due to oxidization (burn-off method) which may be used when there is no solvent that can dissolve the resin. From the reinforcing fiber thus separated, 100 flow units of reinforcing fiber are selected randomly and the number of monofilaments contained in each of the flow units is measured, followed by calculating the average, which can be adopted as the bundled average number k. Here, it should be noted that for the extraction of reinforcing fiber from fiber-reinforced resin, the burn-off method and the dissolution method give similar results that do not differ significantly if carried out under appropriately selected conditions.

Next, a useful method to measure the number-average fiber length Ln of reinforcing fiber contained in fiber-reinforced resin is removing the resin component contained in the fiber-reinforced resin by the resin component removal method described above and then separating the reinforcing fiber, followed by measurement based on microscopic observations. For the measurement, 400 threads of the reinforcing fiber are selected randomly and their length is measured with an accuracy down to units of micrometers under an optical microscope, followed by calculating the number-average fiber length Ln by equation (7) given below. Here, it should be noted that for the extraction of reinforcing fiber from fiber-reinforced resin, the burn-off method and the dissolution method give similar results that do not differ significantly if carried out under appropriately selected conditions.

[Formula 7]

$$Ln = \frac{\sum Li}{400} \cdot \cdot \cdot \cdot (7)$$

Li: measured fiber length (i = 1, 2, 3, ..., 400)

The basis weight Wf of the reinforcing fiber contained in fiber-reinforced resin can be determined by removing the resin component from the fiber-reinforced resin layer and measuring the weight of the reinforcing fiber alone. To remove the resin component from the fiber-reinforced resin, it is preferable to use the above-mentioned method designed to remove the resin component. The weight may be determined by using an electronic weighing instrument or an electronic balance. For the determination, it is preferable to use a 100 mm × 100 mm specimen of the fiber-reinforced resin and take three measurements, following by calculating the average.

The density pf of reinforcing fiber can be determined by such a method as the immersion method, pycnometer method, and sink-float method. Only the resin component is removed from a 10 mm × 10 mm specimen of a fiber-reinforced resin layer by the dissolution method or the burn-off method and the remaining reinforcing fiber is used for measurement. For example, three measurements are taken and their average is used.

Available methods for measuring the thickness h of a fiber-reinforced resin layer include the use of existing measuring means including, for example, calipers, micrometer, laser displacement gauge, and camera to photograph the thickness, as in the case of measuring the thickness h0 of the surface layer part of the first member (I). Specifically, a useful method for simple and accurate measurement is to leave a fiber-reinforced resin layer to stand for 10 minutes in an atmosphere of a temperature of 23°C and then measure the thickness with a micrometer at randomly selected 10 positions located at intervals of about 100 mm, followed by calculating the average to give a value to represent the thickness of the fiber-reinforced resin layer.

Described next is the extension rate used for the invention. To measure the extension rate, a disk-like specimen cut out of a fiber-reinforced resin layer is put on a mold having a pair of opposed, concave and convex, inner planes and the fiber-reinforced resin layer is heated at a temperature higher by 35°C than the softening temperature or melting point, followed by performing press molding at 20 MPa. The extension rate is defined as the percent ratio between the area of the fiber-reinforced resin layer measured before the pressing and that measured after the pressing as shown by equation (8) given below. The disk-like specimen cut out of the layer should have a diameter of 150 mm and a thickness of 2.5 mm. Three measurements are taken and their average is adopted to represent the extension rate. To determine the diameter of a disk-like specimen of a fiber-reinforced resin layer, the diameter may be measured at three randomly selected positions and the average may be adopted.

[Formula 8]

$$\text{Extension rate} = \{(\text{area of molded product after molding step})$$

$$- (\text{area of molding composition before molding step})\} \times 100 \dots\dots (8)$$

For the present invention, a fiber-reinforced resin layer having a density parameter p of $2 \times 10^4$ or more and $1 \times 10^8$ or less, which is referred to here as fiber-reinforced resin layer (X), is used as fiber-reinforced resin that forms mainly the surface layer part. The fiber length is preferably shorter to improve the surface appearance of the surface layer part whereas the fiber length is preferably longer to increase its rigidity. To ensure a good balance between surface appearance and rigidity, it is more preferable for the fiber-reinforced resin layer (X) to have a density parameter p of $2 \times 10^4$ or more and $1 \times 10^6$ or less. On the other hand, a fiber-reinforced resin layer having a density parameter p that is $1 \times 10^1$ or more and not more than 0.1 times the density parameter of the fiber-reinforced resin layer (X) is referred to here as fiber-reinforced resin layer (Y) and it is used as fiber-reinforced resin that mainly forms the core part. Furthermore, since the surface appearance of the core part is improved by shortening the fiber length, the density parameter p of the fiber-reinforced resin layer (Y) is preferably $1 \times 10^1$ or more and less than $2 \times 10^4$, whereas since the reinforcing effect for the core part high can be increased by lengthening the fiber length, it is preferably $1 \times 10^2$ or more and not more than 0.1 times the density parameter of the fiber-reinforced resin layer (X).

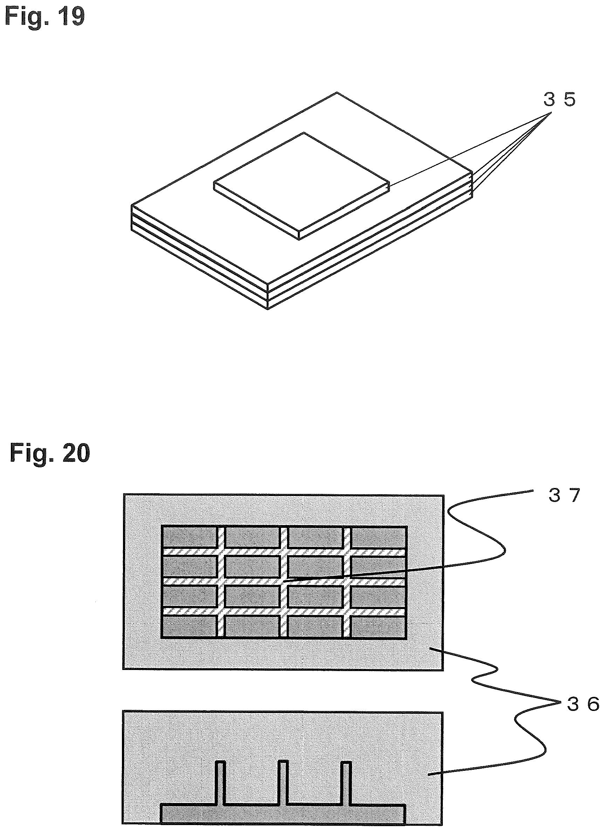

There are no specific limitations on the arrangement of the fiber-reinforced resin layer (X) and the fiber-reinforced resin layer (Y) in a preform used for the present invention, and they may be stacked or located side by side, but from the viewpoint of enhancing the flexibility of design of the first member (I), it is preferable to use a preform in which the fiber-reinforced resin layer (X) and the fiber-reinforced resin layer (Y) are stacked and it is more preferable to use a preform in which the fiber-reinforced resin layer (X) faces the mold surface that is opposed to the other mold surface having a groove. Furthermore, since it is preferable for the stack to have a symmetric structure to ensure the formation of a molded product having little warp, it is preferable to use a preform in which there is another fiber-reinforced resin layer (X) that faces the mold surface having a groove, with the fiber-reinforced resin layer (Y) being sandwiched between the two fiber-reinforced resin layers (X). From the viewpoint of the flexibility of design and simplification of the preform production step, the fiber-reinforced resin layers preferably have a thickness of 0.03 to 1.0 mm, more preferably 0.1 to 0.5 mm. In addition, the fiber-reinforced resin layers may have an uneven shape such as those shown in Fig. 18 and in particular, smooth plate-like layers are preferable from the viewpoint of workability in the stacking step. If a preform used for the present invention consists of stacked fiber-reinforced resin layers, the number of stacked fiber-reinforced resin layers may vary in different parts of the stack as shown in Fig. 19 and a larger number of layers may be stacked in the regions where the core part is to be formed, in order to ensure easy formation of the core part.

Here, a preform used for the present invention may have a structure in which fiber-reinforced resin layers (Y) and fiber-reinforced resin layers (X) are arranged side by side. In this case, the side-by-side arrangement of the fiber-reinforced resin layers (X) and fiber-reinforced resin layers (Y) serves to prevent the fiber-reinforced resin layers (Y) from flowing in the plane direction and allow them to fill the grooves smoothly.

From the viewpoint of effectively and easily allowing the reinforcing fiber of the fiber-reinforced resin layer (Y) to stay in the core part in carrying out the production method for the molded product according to the present invention, the number-average fiber length Lny of the reinforcing fiber (a1) contained in the fiber-reinforced resin layer (Y) is preferably 5 times or less, more preferably 3 times or less, as large as the groove width b of the concave designed to form the core part. This relation allows the reinforcing fiber to easily flow into the core part so that a highly rigid core part will be formed.

The expression "a fiber-reinforced resin layer is located at a projected position of a groove for forming a protruding core part" used for the present invention means, for example, that a fiber-reinforced resin layer is located substantially within the region of the projected plane of a groove, e.g. the projected plane 37 in Fig. 20, or that a fiber-reinforced resin layer is located to cover the whole region of the projected plane of a groove, or that a fiber-reinforced resin layer is located to cover part of the region of the projected plane of a groove.

From the viewpoint of facilitating the filling of the groove, it is preferable for the fiber-reinforced resin layer to be located so as to cover the whole region of the projected plane of the groove. Furthermore, it is preferable for the fiber-reinforced resin layer (Y) used for the present invention to have an area that is 0.5 times or more as large as the projected area of the groove designed to form the core part so that the core part will be sufficiently filled with the fiber-reinforced resin layer (Y). As shown in Fig. 20, the projected area of a groove refers to the area of the projected plane (hatched part) of the groove in the mold. If the area of the fiber-reinforced resin layer (Y) is smaller than this, a larger quantity will flow out over the plane than into the core part to fill it, possibly leading to insufficient filling of the core part. It is more preferable for the area of the fiber-reinforced resin layer (Y) to be equal to or larger than the projected area of the groove. If the projected area of the groove is small, the fiber-reinforced resin layer cut out will also be small accordingly, leading to inferior handleability. Thus, it is industrially more preferable for the area of the fiber-reinforced resin layer (Y) to be 5 times or more, still more preferably 10 or more, as large. In regard to the upper limit of the area of the fiber-reinforced resin layer (Y), it is preferably less than 50 times as large, more preferably less than 30 times as large because the fiber-reinforced resin layer (Y) located in the face plate portion may flow to reduce the isotropy of the fiber-reinforced resin layer (X) and also because the portion of the fiber-reinforced resin layer (Y) that works substantially to fill the core part is almost entirely accounted for by the portion of the fiber-reinforced resin layer (Y) located within the region of the projected plane of the groove.

For the present invention, the area of the fiber-reinforced resin layer (X) preferably accounts for 70% or more of the projected area of the surface layer part of the first member (I) to be formed by molding and the fiber-reinforced resin layer (Y) is located preferably at the projected position of the groove to be formed in the protruding core part.

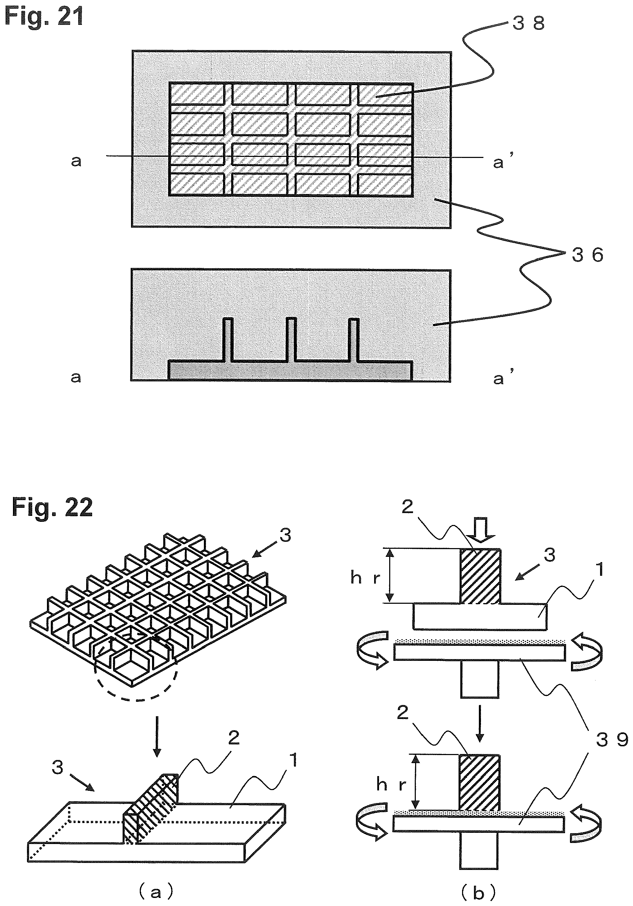

As shown in Fig. 21, the projected area of the surface layer part of the first member (I) refers to the area of the projected plane (hatched part) of the first member (I) in the mold. If the area of the fiber-reinforced resin layer (X) accounts for 70% or more of the projected area of the surface layer part of the first member (I), excessive flows in the fiber-reinforced resin layer will be prevented during the molding process, allowing the molding to be performed while maintaining the fiber orientation in the fiber-reinforced resin layer. From the viewpoint of maintaining the isotropy of the fiber-reinforced resin layer, the area of the fiber-reinforced resin layer (X) more preferably accounts for 80% or more of the projected area of the molded product. In regard to the upper limit of the area of the fiber-reinforced resin layer (X), it is preferably 150% or less of the projected area of the molded product from the viewpoint of effective use of the fiber-reinforced resin layer and reduction of waste.

The number-average fiber length Lnx of the fiber-reinforced resin layer (X) used for the present invention is preferably 2 mm or more, more preferably 3 mm or more, to allow the surface layer part of the first member (I) to have a sufficient strength. In regard to the upper limit of the number-average fiber length Lnx of the fiber-reinforced resin layer (X), it is preferably 20 mm or less, more preferably 10 mm or less because the formativeness of the face plate portion may deteriorate if the fiber length is too large.

There are generally two types of molds that can be used for the present invention. Specifically, they are closed molds designed for casting or injection molding and un-closed molds designed for press molding or forging. Material is mainly poured into the interior of a closed mold to carry out molding whereas an un-closed mold is mainly used to transform the shape of material to carry out molding without causing it to flow. When using a closed mold, the preform formed of the fiber-reinforced resin layers fed is isolated from the exterior without flowing out of the cavity, allowing the fiber-reinforced resin layers to flow into the groove effectively and easily under a small molding pressure. Furthermore, this serves to produce a fiber-reinforced resin molded product having clean edges and accordingly simplify or eliminate subsequent secondary processing steps to ensure cost reduction. When an un-closed mold is used, excessive flows in the preform are prevented during the molding process, serving to minimize the disturbance in the fiber orientation in the fiber-reinforced resin layer or preform during the molding process and efficiently prevent anisotropic fiber orientation from being caused by the flow during the molding process. Consequently, a molded product that reflects the fiber orientation in the fiber-reinforced resin layer or preform can be produced. Furthermore, the pyrolysis gas and incoming air that occur during the molding process can be removed out of the mold, allowing the production of a molded product containing considerably free of voids.

For the present invention, when the fiber-reinforced resin (A) of the first member (I) is produced by stacking fiber-reinforced resin layers, the stack structure of the fiber-reinforced resin layers is preferably such that a fiber-reinforced resin layer with a small reinforced fiber volume fraction Vf and/or a fiber-reinforced resin layer formed of reinforcing fiber with a small number-average fiber length Ln are located at the position where the protruding core part will be formed, thereby ensuring a improved flexibility of design and moldability. The reinforced fiber volume fraction and the number-average fiber length of reinforcing fiber can influence the flowability of the fiber-reinforced resins and accordingly, an intended shape can be formed easily by using high-flowability material in the protruding core part, which has a complicated shape. From a similar point of view, the fiber-reinforced resin layers used may be formed of a matrix resin that is low in viscosity as long as a molded product with good characteristics can be obtained.

**EXAMPLES**

The present invention is described in more detail below with reference to Examples.

<Evaluation method 1: evaluation of the number of threads of reinforcing fiber (a1)>

A portion having a protruding shape as shown in Fig. 22(a) is cut out of the resulting molded product and then the planar surface layer part is removed by wet polishing so that the boundary surface between the surface layer part and the core part can be observed as shown in Fig. 22(b) to provide a sample for cross-sectional observation. The whole cross section of the polished sample was photographed at a magnification of 200 times using an ultra-deep color 3D profile measuring microscope (VK-9500 controller/VK-9510 measuring unit, manufactured by Keyence Corporation). The photographed image was examined by using an analysis program (VK-H1A9) to measure the number of threads of the reinforcing fiber (a1) contained in a 1 mm$^2$ area at an arbitrary position in the boundary surface between the surface layer part and the core part.

<Evaluation method 2: evaluation of number-average fiber length Ln of reinforcing fiber>

A molded product is heated in air at 500°C for one hour to burn off the resin component. From the remaining reinforcing fiber, 400 threads are selected randomly and their length is measured with an accuracy down to units of micrometers under an optical microscope, followed by calculating the number-average fiber length by equation (7).

<Evaluation method 3: measurement of two-dimensional orientation angle of reinforcing fiber>

As shown in Fig. 4, a sample of fiber-reinforced resin was sandwiched between two stainless steel mesh sheets (plain weave mesh of 50 lines per 2.5 cm) to provide a test piece, which was then fixed with screws so that the fiber-reinforced material would not move. It was heated in air at 500°C for one hour to burn off the resin component. After removing the stainless steel mesh sheets, the resulting reinforced fiber substrate was observed by microscopy and one reinforcing monofilament (1) was selected randomly, followed by determining the two-dimensional orientation angle between this reinforcing monofilament and another reinforcing monofilament that crosses the former from image observation. Of the two angles made between the two reinforcing monofilaments crossing each other, the one that was 0° or more and 90° or less (i.e., acute angle) was adopted. For one reinforcing monofilament (1), 20 measurements of the two-dimensional orientation angle were taken. Such measurements were taken for a total of five reinforcing monofilaments and their average was adopted as the value of the two-dimensional orientation angle.

<Evaluation method 4: evaluation of homogenization of the surface layer part and core part>

A sample of the core part was cut out of a molded product as shown in Fig. 23(a) and the weight Mrc of the core part was measured. After the weight measurement, the sample was heated in air at 500°C for one hour to burn off the resin component and then the weight Mrf of the remaining reinforcing fiber was measured. The weight packing rate Wfr of the reinforcing fiber in the core part was calculated from these weight measurements by Equation (9).
[Formula 9]

$$ W f r = \frac{M r f}{M r c} \times 1 0 0 \cdots \cdots (9) $$

By applying the same procedure to a sample of the surface layer part as shown in Fig. 23(b), the weight Mfc of the surface layer part and the weight Mff of the reinforcing fiber in the burnt-off sample of the surface layer part were measured and the weight packing rate Wff of the reinforcing fiber in the surface layer part was calculated by equation (10).
[Formula 10]

$$ W f f = \frac{M f f}{M f c} \times 1 0 0 \cdots \cdots (1 0) $$

The calculations made by equations (9) and (10) were put in equation (11) given below to determine the homogenization of the surface layer part and the core part.
[Formula 11]

$$ \text{Homogenization} = (W fr/W ff) \times 100 \quad \ldots (11) $$

<Evaluation method 5: evaluation of fiber length rate Lp and fiber reinforced rate Fr of reinforcing fiber>

A sample containing the boundary surface between the surface layer part and the core part was cut out as shown in Fig. 22(a) and sandwiched between two stainless steel mesh sheets (plain weave mesh of 50 lines per 2.5 cm) to provide a test piece as shown in Fig. 4 and it was fixed with screws so that the reinforcing fiber would not move. It was heated in air at 500°C for one hour to burn off the resin component. After removing the stainless steel mesh sheets, the resulting reinforcing fiber was observed by microscopy and one thread of the reinforcing fiber was selected randomly, followed by determining the relation between the reinforcing fiber and the boundary surface based on image observation. Then, the fiber length rate Lp of the reinforcing fiber was calculated by equations (1) or (2) given previously where Lr represents the length of the segment of the thread of reinforcing fiber extending from the boundary surface into the core part and Lf represents the length of the segment of the thread of reinforcing fiber existing in the surface layer part.

For the fiber length rate, 50 measures were taken from one sample and their average was adopted to represent the fiber length rate.

The fiber reinforced rate was calculated from the fiber length rate Lp as well as Lr and Lf by equation (3) or equation (4) given previously.

<Evaluation method 6: evaluation of component rate of the core part>

The component rate of the core part was calculated from the width and length of the core part by equation (12).
[Formula 12]

$$\text{Component rate} = (\text{total cross section of core part}) / (\text{cross section of surface layer part}) \times 100 \quad \ldots\ldots (12)$$

The total cross section of the core part can also be calculated from the subtraction of the area of the vacancy from the cross section of the surface layer part by equation (13) given below.
[Formula 13]

$$\text{Component rate} = (\text{cross section of surface layer part - total area of vacancy}) / (\text{cross section of the surface layer part}) \times 100 \quad \ldots\ldots (13)$$

<Evaluation method 7: evaluation of specific gravity of molded product>

A 20 mm $\times$ 20 mm piece was cut out from a molded product to provide a sample for specific gravity evaluation. Except for using this sample with ethanol as the immersion liquid, the measuring procedure specified in JIS K 7112 A (immersion method) was carried out.

When the specific gravity of the molded product was less than the specific gravity of ethanol, the length, width, and thickness of the sample cut out as above was measured with a micrometer and the volume of the molded product was calculated. The weight of the sample cut out above was also measured using a precision balance. The weight of the molded product thus measured was divided by the volume of the molded product and the quotient was used to represent the specific gravity of the molded product.

<Evaluation method 8: evaluation of density parameter p of fiber-reinforced resin layer>

The height h (mm) of each fiber-reinforced resin layer was measured with a micrometer as described below. For a fiber-reinforced resin layer left to stand for 10 minutes in an atmosphere of a temperature of 23°C, the height was measured at 10 positions randomly selected at intervals of about 100 mm and their average was adopted to represent the height h (mm) of fiber-reinforced resin layer.

The basis weight and fiber weight percent of each fiber-reinforced resin layer were measured as described below. A 100 mm $\times$ 100 mm square sheet was cut out of a fiber-reinforced resin layer and its weight w0 (g) was measured. Then, the sample of the fiber-reinforced resin layer was heated in air at 500°C for one hour to burn off the resin component and then the weight w1 (g) of the remaining reinforcing fiber was measured. Subsequently, the basis weight (g/m$^2$) of the reinforcing fiber contained in the fiber-reinforced resin layer was calculated from the weight w1 (g) of the reinforcing fiber. The fiber weight percent (wt%) was calculated by equation (14) given below. For each case, three measurements were taken and their average was adopted.
[Formula 14]

$$\text{Fiber weight percent} = (\text{weight of reinforcing fiber } w1$$

$$/ \text{ weight of molding composition } w0) \times 100 \quad \dots\dots (14)$$

For the calculation of the flow unit n of the reinforcing fiber contained in each fiber-reinforced resin layer, the bundled average number k of the reinforcing fiber was measured by the method described below. Here, the diameter d0 ($\mu$m) of monofilaments was measured in advance using a scanning type electron microscope (SEM). When it was not perfectly spherical, measurements were taken at 10 randomly selected positions and their average was adopted to represent the diameter d0 ($\mu$m) of the monofilament.

First, a 100 mm × 100 mm square sheet was cut out of a fiber-reinforced resin layer and the square sheet was heated in air at 500°C for one hour to burn off the resin component and the remaining reinforcing fiber was observed by optical microscopy, followed by calculating the bundled average number of flow units composed of reinforcing fiber. A flow unit has a width and height of about d0, then it is a monofilament and the bundled number is one. A rough multiple of d0 is determined from a representative width and a representative height of the flow unit and then the bundled number k of the flow unit is calculated. After randomly selecting 100 flow units composed of reinforcing fiber, measurements were taken by the above operation and their average was adopted to represent the bundled number k of the flow units.

The number-average fiber length Ln of the reinforcing fiber contained in each fiber-reinforced resin layer was measured as described below. A part of a fiber-reinforced resin layer was cut out and heated in air at 500°C in an electric furnace for 30 minutes so that the resin is removed thoroughly by incineration to allow the reinforcing fiber to be separated, and 400 or more threads were extracted randomly from the reinforcing fiber separated. The fiber length of the extracted reinforcing fiber measured by optical microscopy and the length of 400 threads of fiber was measured with an accuracy down to units of micrometers, followed by calculating the number-average fiber length Ln by equation (7).

From the measurements taken above, the number n of flow units of reinforcing fiber contained in a unit area (1 mm$^2$) of the fiber-reinforced resin layer was calculated by equation (6) given above.

Furthermore, the density parameter p of the fiber-reinforced resin layer was calculated by equation (5) given above.

<Evaluation method 9: evaluation of extension rate of fiber-reinforced resin layer>

The extension rate of a fiber-reinforced resin layer was measured as described below. First, a disk with a diameter of 150 mm was cut out of a fiber-reinforced resin layer. The thickness of the disk-like fiber-reinforced resin layer was adjusted to 2.5 mm to provide a sample for measurement and it was placed in an oven equipped with a far-infrared heater and preheated for 10 minutes. During this step, heat history was measured by a thermocouple fixed at the center of the surface of the sample and recorded by a multi-input data collection system (NR-600, manufactured by Keyence Corporation). After confirming that the measured temperature was higher by 35°C than the melting point of the nonblended resin, the sample was taken out of the oven and placed on the lower mold half, followed by lowering the upper mold half to press-mold it at a unit pressure of 20 MPa. After maintaining the pressure for one minute under the above conditions, the sample was cooled and the upper mold half was raised to provide a molded product. The resulting molded product had an almost perfect circular disk shape.

The diameter of the molded product was measured at three arbitrary positions and the average of the measurements was used to determine the area of the molded product obtained from the molding step. The area of the fiber-reinforced resin layer sample before the molding step was calculated on the assumption that its diameter was 150 mm. Here, the extension rate of the fiber-reinforced resin layer was calculated by equation (8) given above.

<Evaluation method 10: evaluation of shear strength of the core part>

A test piece with a width of 5 mm containing a part of the core part was cut out of the first member (I) as shown in Fig. 22(a) and the width and length of the boundary surface between the surface layer part and the core part were measured with a micrometer and calipers. This test piece was fixed to a jig designed for shear evaluation and a compressive shear load was applied to the core part according to JIS K7076 to determine the load at the rupture of the core part. Then, the shear strength of the core part, which is defined as the quotient of the area of the boundary surface divided by this load, was calculated.

<Evaluation method 11: evaluation of rigidity of the molded product>

A test piece with a width of 25 mm was cut out of the resulting molded product and the thickness of the test piece was measured with a micrometer. A bending load was applied to this test piece according to JIS K7074 under conditions where the ratio between the thickness of the test piece and the span, L/D, was 12 and the test piece was deformed until the bending deflection reached 2 mm or more.

In the evaluation, a test piece was ranked as C when rupture of the test piece and/or damage or peeling of the core part of the test piece occurred before reaching a bending deflection of 2 mm, B when it occurred at a bending deflection of more than 2 mm and not more than 4 mm, and A when such a defect did not occur at a bending deflection of 4 mm or more.

<Reference example 1: preparation of carbon fiber>

Continuous carbon fiber composed of a total of 12,000 filaments was prepared by spinning a polymer containing polyacrylonitrile as primary component, followed by calcination. The continuous carbon fiber was treated with a sizing agent by the immersion method and dried in heated air with a temperature of 120°C to provide PAN-based carbon fiber. This PAN-based carbon fiber had characteristics as described below.

Monofilament diameter: 7 μm
Weight per unit length: 0.83 g/m
Density: 1.8 g/cm$^3$
Tensile strength: 4.0 GPa
Tensile modulus: 235 GPa
Type of sizing agent: polyoxyethylene oleyl ether
Deposit of sizing agent: 2 wt%

<Reference example 2: chopped carbon fiber 1>

Carbon fiber prepared in Reference example 1 was cut with a cartridge cutter to provide chopped carbon fiber with a fiber length of 3 mm.

<Reference example 3: chopped carbon fiber 2>

Chopped carbon fiber 2 with a fiber length of 6 mm was prepared by the same procedure as in Reference example 2.

<Reference example 4: chopped carbon fiber 3>

Chopped carbon fiber 3 with a fiber length of 9 mm was prepared by the same procedure as in Reference example 2.

<Reference example 5: chopped carbon fiber 4>

Chopped carbon fiber 4 with a fiber length of 12 mm was prepared by the same procedure as in Reference example 2.

<Reference example 6: chopped carbon fiber 5>

Chopped carbon fiber 5 with a fiber length of 50 mm was prepared by the same procedure as in Reference example 2.

<Reference example 7: chopped glass fiber>

CS13G-874 (trade name, manufactured by Nitto Boseki Co., Ltd.)

Monofilament diameter: 10 μm
Specific gravity: 2.5 g/cm$^3$
Fiber length: 13 mm (nominal value)

<Reference example 8: nylon 6 resin>

"AMILAN" (registered trademark) CM1001, melting point 225°C, manufactured by Toray Industries, Inc.

<Reference example 9: nylon copolymer>

"AMILAN" (registered trademark) CM4000, melting point 155°C, manufactured by Toray Industries, Inc.

<Reference example 10: non-modified polypropylene resin>

"Prime Polypro" (registered trademark) J105G, melting point 160°C, manufactured by PRIME POLYMER.

<Reference example 11: acid-modified polypropylene resin>

"ADMER" (registered trademark) QE510, melting point 160°C, manufactured by Mitsui Chemicals, Inc.

<Reference example 12: polyphenylene sulfide resin>

"TORELINA" (registered trademark) A900, melting point 278°C, manufactured by Toray Industries, Inc.

<Reference example 13: continuous carbon fiber prepreg>

"TORAYCA" prepreg P3052S-12, manufactured by Toray Industries, Inc.

<Reference example 14: polypropylene foam sheet>

EFCELL (trade name, 2-fold formed, 1 mm thick), manufactured by Furukawa Electric Co., Ltd.

<Reference example 15: reinforced long-fiber nylon resin pellet>

"TORAYCA" (registered trademark) TLP1040, manufactured by Toray Industries, Inc.

<Reference example 16: preparation of carbon fiber mat 1>

Water and a surface active agent (polyoxyethylene lauryl ether (trade name), manufactured by Nacalai Tesque, Inc.) were mixed to prepare a dispersion liquid with a concentration of 0.1 wt% and a papermaking substrate was produced from this dispersion liquid and the above chopped carbon fiber 1 using a papermaking substrate production apparatus shown in Fig. 24. The production apparatus is composed mainly of a cylindrical container equipped with an outlet cock at the bottom of the container, which serves as dispersion vessel, a papermaking tank, and a linear transport portion connecting the dispersion vessel and the papermaking tank. The dispersion vessel is equipped with a stirrer attached at the top opening and chopped carbon fiber and dispersion liquid (dispersion medium) can be fed through the opening. The papermaking tank is equipped with a mesh conveyor that has a papermaking face at the bottom and a conveyor that can transport a carbon fiber substrate (papermaking substrate) is connected to the mesh conveyor. Papermaking operations were carried out in a dispersion liquid with a carbon fiber concentration adjusted to 0.05 wt%. The apparatus was dehydrated by aspiration, followed by drying for 2 hours at a temperature of 150°C to provide a carbon fiber mat 1.

<Reference example 17: preparation of carbon fiber mat 2>

According to the same procedure as in Reference example 16, a carbon fiber mat 2 was produced from the chopped carbon fiber 2 prepared in Reference example 3.

<Reference example 18: preparation of carbon fiber mat 3>

According to the same procedure as in Reference example 16, a carbon fiber mat 3 was produced from the chopped carbon fiber 3 prepared in Reference example 4.

<Reference example 19: preparation of carbon fiber mat 4>

According to the same procedure as in Reference example 16, a carbon fiber mat 4 was produced from the chopped carbon fiber 4 prepared in Reference example 5.

<Reference example 20: preparation of carbon fiber mat 5>

According to the same procedure as in Reference example 16, a carbon fiber mat 5 was produced from the chopped carbon fiber 5 prepared in Reference example 6.

<Reference example 21: preparation of glass fiber mat>

According to the same procedure as in Reference example 16, a glass fiber mat was produced from the chopped glass fiber prepared in Reference example 7.

<Reference example 22: preparation of nylon 6 resin film>

The nylon 6 resin described in Reference example 8 was fed into a twin screw extruder through its hopper, melt-kneaded in the extruder, and extruded through a T-die. Subsequently, the material was taken up on a chilled roll at 80°C for cooling and solidification to provide a nylon 6 resin film.

<Reference example 23: preparation of nylon copolymer film>

The nylon copolymer described in Reference example 9 was melt-kneaded as in Reference example 22 to provide a copolymer resin film.

<Reference example 24: preparation of polypropylene resin film>

The non-modified polypropylene resin and acid-modified polypropylene resin described in Reference example 10 and Reference example 11, respectively, were dry-blended at a ratio of 90 wt% and 10 wt%. This dry-blended mixture was melt-kneaded as in Reference example 22 to provide a polypropylene resin film.

<Reference example 25: preparation of polyphenylene sulfide resin film>

The polyphenylene sulfide resin described in Reference example 12 was melt-kneaded as in Reference example 22 to provide a polyphenylene sulfide resin film.

<Reference example 26: preparation of molding composition 1>

The carbon fiber mat 1 prepared in Reference example 16 and the nylon 6 resin film prepared in Reference example 22 were stacked to provide a preform. A preform sandwiched between release sheets is placed on a metallic tool plate and then another tool plate is put on top of the stack. Sheets (1 mm thick) of Teflon (registered trade mark) were release sheets. Subsequently, the preform was placed between the platens of a hydraulic pressing machine, which consisted of a top and a bottom platen heated at 250°C, followed by pressing at a unit pressure of 5 MPa. Then, the stack was conveyed to another hydraulic pressing machine controlled at a temperature of 80°C, placed between cooled platens, and cold-pressed under a unit pressure of 5 MPa to provide a molding composition 1 composed of a carbon fiber mat and nylon 6 resin and having a thickness of 0.15 mm and a fiber weight percent of 7.8 wt%. Other material characteristics are shown in Table 1.

<Reference examples 27 to 29: preparation of molding compositions 2 to 4>

As in Reference example 26, molding compositions 2 to 4 were prepared from the carbon fiber mat 1 prepared in Reference example 16 and the nylon 6 resin film prepared in Reference example 22. Measurements of the thickness and fiber weight percent as well as other material characteristics are shown in Table 1.

<Reference examples 30 and 31: preparation of molding compositions 5 and 6>

As in Reference example 26, molding compositions 5 and 6 were prepared from the carbon fiber mat 2 prepared in Reference example 17 and the nylon 6 resin film prepared in Reference example 22. Measurements of the thickness and fiber weight percent as well as other material characteristics are shown in Table 1.

<Reference example 32: preparation of molding composition 7>

As in Reference example 26, a molding composition 7 was prepared from the carbon fiber mat 3 prepared in Reference example 18 and the nylon 6 resin film prepared in Reference example 22. Measurements of the thickness and fiber weight percent as well as other material characteristics are shown in Table 1.

<Reference examples 33 and 34: preparation of molding compositions 8 and 9>

As in Reference example 26, molding compositions 8 and 9 were prepared from the carbon fiber mat 4 prepared in Reference example 19 and the nylon 6 resin film prepared in Reference example 22. Measurements of the thickness and fiber weight percent as well as other material characteristics are shown in Table 1.

<Reference example 35: preparation of molding composition 10>

As in Reference example 26, a molding composition 10 was prepared from the carbon fiber mat 5 prepared in Reference example 20 and the nylon 6 resin film prepared in Reference example 22. Measurements of the thickness and fiber weight percent as well as other material characteristics are shown in Table 1.

<Reference example 36: preparation of molding composition 11>

The nylon 6 resin of Reference example 8 was prepared and the dry-blended mixture was melt-kneaded in a twin screw extruder controlled at 260°C. The chopped carbon fiber 2 prepared in Reference example 3 was fed into the extruder through a side feeder, followed by further kneading. After being melt-kneaded in the extruder, the material was extruded through a T-die (500 mm wide). Subsequently, the material was taken up on a chilled roll at 80°C for cooling and solidification to provide a carbon fiber/nylon 6 resin sheet. Measurements of the thickness and fiber weight percent as well as other material characteristics are shown in Table 2.

<Reference example 37: preparation of molding composition 12>

As in Reference example 26, a molding composition 12 was prepared from the glass fiber mat prepared in Reference example 21 and the nylon 6 resin film prepared in Reference example 22. Measurements of the thickness and fiber weight percent as well as other material characteristics are shown in Table 2.

<Reference example 38: preparation of molding composition 13>

Except that the hydraulic pressing machine used for heat molding had top and bottom heated platen surfaces controlled at a temperature of 230°C and that the hydraulic pressing machine used for cold molding had top and bottom cooled platen surfaces controlled at a temperature of 60°C, press molding was carried out as in Reference example 26. In this instance, the carbon fiber mat 1 prepared in Reference example 16 and the polypropylene resin film prepared in Reference example 24 were stacked to provide a molding composition 13. Measurements of the thickness and fiber weight percent as well as other material characteristics are shown in Table 2.

<Reference example 39: preparation of molding composition 14>

As in Reference example 38, a molding composition 14 was prepared from the carbon fiber mat 2 prepared in Reference example 17 and the polypropylene resin film prepared in Reference example 24. Measurements of the thickness and fiber weight percent as well as other material characteristics are shown in Table 2.

<Reference example 40: preparation of molding composition 15>

As in Reference example 38, a molding composition 15 was prepared from the carbon fiber mat 3 prepared in Reference example 18 and the polypropylene resin film prepared in Reference example 24. Measurements of the thickness and fiber weight percent as well as other material characteristics are shown in Table 2.

<Reference example 41: preparation of molding composition 16>

The non-modified polypropylene resin and acid-modified polypropylene resin described in Reference example 10 and Reference example 11, respectively, were dry-blended at a ratio of 90 wt% and 10 wt%. The dry-blended mixture was melt-kneaded in a twin screw extruder controlled at 200°C and the chopped carbon fiber 2 prepared in Reference example 3 was fed into the extruder through a side feeder, followed by further kneading. After being melt-kneaded in the extruder, the material was extruded through a T-die (500 mm wide). Subsequently, the material was taken up on a chilled roll at 60°C for cooling and solidification to provide a carbon fiber/polypropylene resin sheet. Measurements of the thickness and fiber weight percent as well as other material characteristics are shown in Table 2.

<Reference example 42: preparation of molding composition 17>

Except that the hydraulic pressing machine used for heat molding had top and bottom heated platen surfaces controlled at a temperature of 300°C and that the hydraulic pressing machine used for cold molding had top and bottom cooled platen surfaces controlled at a temperature of 100°C, press molding was carried out as in Reference example 26. In this instance, the carbon fiber mat 1 prepared in Reference example 16 and the polyphenylene sulfide resin film prepared in Reference example 25 were stacked to provide a molding composition 17. Measurements of the thickness and fiber weight percent as well as other material characteristics are shown in Table 2.

<Reference example 43: preparation of molding composition 18>

As in Reference example 42, a molding composition 18 was prepared from the carbon fiber mat 2 prepared in Reference example 17 and the polyphenylene sulfide resin film prepared in Reference example 25. Measurements of the thickness and fiber weight percent as well as other material characteristics are shown in Table 2.

<Reference example 44: preparation of molding composition 19>

As in Reference example 42, a molding composition 19 was prepared from the carbon fiber mat 4 prepared in Reference example 19 and the polyphenylene sulfide resin film prepared in Reference example 25. Measurements of the thickness and fiber weight percent as well as other material characteristics are shown in Table 2.

<Reference example 45: preparation of molding composition 20>

The polyphenylene sulfide resin of Reference example 12 was prepared and dry-blended. The dry-blended mixture was melt-kneaded in a twin screw extruder controlled at 300°C and the chopped carbon fiber 2 prepared in Reference example 3 was fed into the extruder through a side feeder, followed by further kneading. After being melt-kneaded in the extruder, the material was extruded through a T-die (500 mm wide). Subsequently, the material was taken up on a chilled roll at 100°C for cooling and solidification to provide a carbon fiber/polyphenylene sulfide resin sheet. Measurements of the thickness and fiber weight percent as well as other material characteristics are shown in Table 2.

<Reference example 46: preparation of nylon 6 resin honeycomb core>

The nylon 6 resin of Reference example 8 was fed into an injection molding machine through a hopper to provide a nylon 6 resin honeycomb core having regular hexagonal through-holes in the thickness direction.

[Example 1]

Two sheets of the molding composition 9 prepared in Reference example 34 and a sheet of the molding composition 3 prepared in Reference example 28 were used as fiber-reinforced resin layers. Here, each sheet of the molding composition 9 is regarded as a fiber-reinforced resin layer (X) while each sheet of the molding composition 3 is regarded as a fiber-reinforced resin layer (Y) depending on the density parameter p of each fiber-reinforced resin layer. Sheets of these molding compositions are stacked in the structure of fiber-reinforced resin layer (X)/fiber-reinforced resin layer (Y)/fiber-reinforced resin layer (X) to provide preform (1). This preform (1) was preheated at 280°C under a nitrogen atmosphere in an extreme infrared radiation heating furnace. The preform (1) was placed in a stamping mold that has honeycomb-shaped cavities with a width of 2 mm designed to form a hollow structure with a 1-mm-high core part as shown in Fig. 12 whose largest projected plane had a regular hexagonal shape. While controlling the mold's cavity surface temperature at 120°C, the mold was closed and a molding pressure of 30 MPa was applied and maintained for 2 minutes. Subsequently, the mold was opened and the molded product was removed to provide a first member ($I_1$) having a core part of a honeycomb shape. The preform (1) was found to have been shaped favorably in conformity with the shape of the mold, resulting in a first member ($I_1$) with high shape quality. Characteristics of the first member ($I_1$) are shown in Table 3.

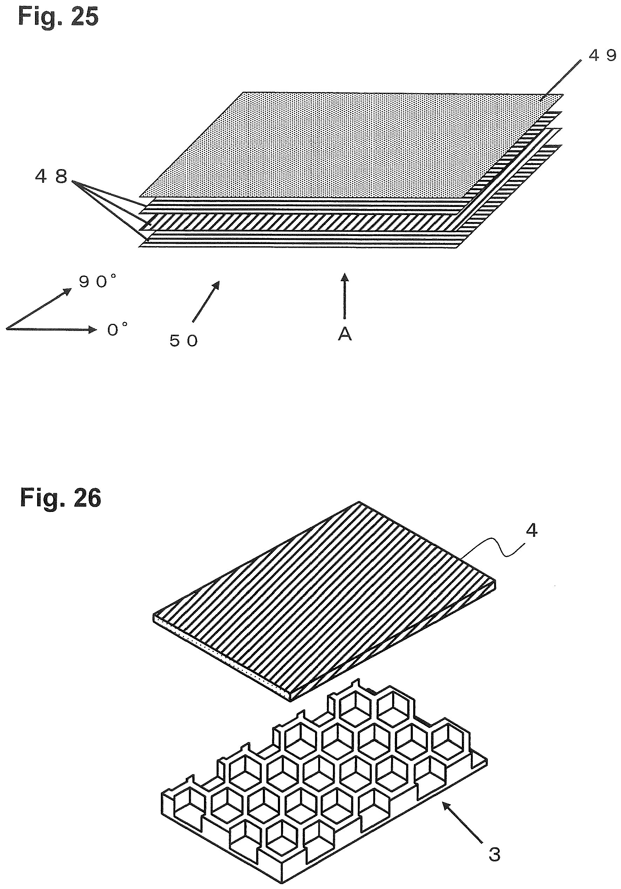

Three plates of the continuous carbon fiber prepreg of Reference example 13 and a plate of the nylon copolymer film prepared in Reference example 23 were used to form a second member (II). As shown in Fig. 25, the plates of the continuous carbon fiber prepreg were stacked with their fiber aligned in the directions of [0°/90°/0°] and the film is added on top of one of the 0° layers.

Then, using a press molding machine, the preform consisting of fiber-reinforced resin layers and a film was heated at 150°C for 30 minutes under a unit pressure of 0.6 MPa to cure the thermosetting resin. After curing, it was cooled at room temperature to provide a second member $(II_1)$ with an average thickness of 0.4 mm.

As shown in Fig. 26, the first member $(I_1)$ and the second member $(II_1)$ thus obtained were combined in such a manner that the core part of the first member $(I_1)$ and the resin film of the second member $(II_1)$ come in contact with each other, heated at 180°C for one minute under a unit pressure of 1 MPa in a press molding machine, taken out of the press molding machine, and cooled at room temperature to provide a molded product (1) consisting of the first member $(I_1)$ and the second member $(II_1)$. Its characteristics are given in Table 3.

[Example 2]

Two sheets of the molding composition 8 prepared in Reference example 33 and a sheet of the molding composition 2 prepared in Reference example 27 were used as fiber-reinforced resin layers. Here, each sheet of the molding composition 8 is regarded as a fiber-reinforced resin layer (X) while each sheet of the molding composition 2 is regarded as a fiber-reinforced resin layer (Y) depending on the density parameter p of each fiber-reinforced resin layer. Except for adding a molding pressure of 15 MPa, the same procedure as in Example 1 was carried out to produce a molded product (2) from them. Its characteristics are given in Table 3.

[Example 3]

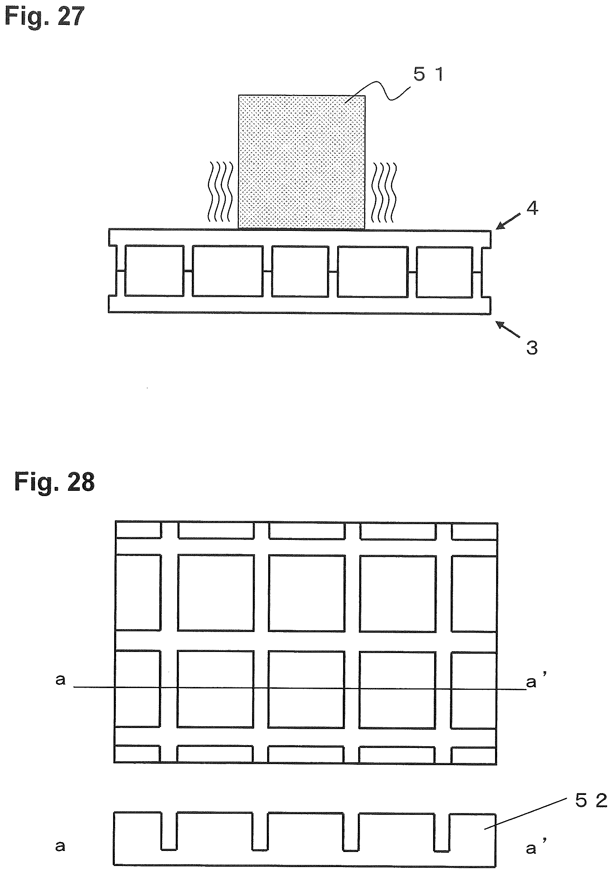

Two of the first member $(I_3)$ were produced as in Example 1 and one of the first members $(I_3)$ was used as second member $(II_3)$. The first member $(I_3)$ and the second member $(II_3)$ thus obtained were combined so that their core parts would come in contact with each other as shown in Fig. 27 and the core parts were bonded by an ultrasonic welding machine to provide a molded product (3). Its characteristics are given in Table 3.

[Example 4]

Except for using a mold designed so that square vacancies would be formed by the core part as shown in Fig. 28, the same procedure as in Example 1 was carried out to produce two first members $(I_4)$ and one of the first members $(I_4)$ was used as second member $(II_4)$. The first member $(I_4)$ and the second member $(II_4)$ thus obtained were combined so that their core parts would come in contact with each other as in Example 3 and the core parts were bonded by an ultrasonic welding machine to provide a molded product (4). Its characteristics are given in Table 3.

[Example 5]

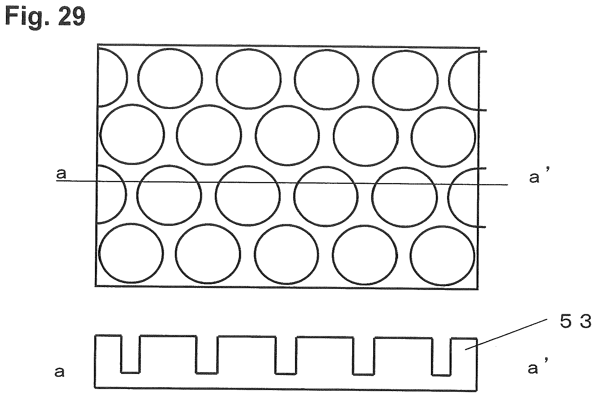

Except for using a mold designed so that circular vacancies would be formed by the core part as shown in Fig. 29, the same procedure as in Example 1 was carried out to produce two first members $(I_5)$ and one of the first members $(I_5)$ was used as second member (115). The first member (15) and the second member (115) thus obtained were combined so that their core parts would come in contact with each other as in Example 3 and the core parts were bonded by an ultrasonic welding machine to provide a molded product (5). Its characteristics are given in Table 3.

[Example 6]

The mold used was a closed mold having the features that the largest projected plane of the hollow structure had a regular hexagonal shape, that the vacancies in the cavities were isolated from the exterior, and that the groove of the core part had a depth of 1.3 mm. The surface temperature of the cavities in the mold was controlled at 260°C. A preform composed of two sheets of the molding composition 9 prepared in Reference example 34, which are regarded as fiber-reinforced resin layers (X), and one sheet of the molding composition 4 prepared in Reference example 29, which is regarded as a fiber-reinforced resin layer (Y), was placed in this mold and after closing the mold, it was preheated for 1 minute under a pressure of 0 and then pressed under a pressure of 5 MPa for 5 minutes. Subsequently, the heater of the press molding machine was turned off and cooling water was supplied into the mold to cool the mold down to a temperature of 100°C. After cooling, the mold was opened and the molded product was removed to provide a first member $(I_6)$ having a core part of a honeycomb shape. The first member $(I_6)$ was found to have been shaped favorably in conformity with the shape of the mold, resulting in a first member $(I_6)$ with high shape quality. Except for using the resulting first member $(I_6)$ instead of the first member $(I_1)$, the same procedure as in Example 1 was carried out to produce a molded product (6). Its characteristics are given in Table 3.

[Example 7]

Two sheets of the molding composition 7 prepared in Reference example 32 and one sheet of the molding composition 1 prepared in Reference example 26 were used as fiber-reinforced resin layers. Here, each sheet of the molding composition 7 is regarded as a fiber-reinforced resin layer (X) while each sheet of the molding composition 1 is regarded as a fiber-reinforced resin layer (Y) depending on the density parameter p of each fiber-reinforced resin layer. Except for using different types of fiber-reinforced resin layers, the same procedure as in Example 1 was carried out to produce a molded product (7). Its characteristics are given in Table 3.

[Example 8]

Two sheets of the molding composition 5 prepared in Reference example 30 and one sheet of the molding composition 11 prepared in Reference example 36 were used as fiber-reinforced resin layers. Here, each sheet of the molding composition 5 is regarded as a fiber-reinforced resin layer (X) while each sheet of the molding composition 11 is regarded as a fiber-reinforced resin layer (Y) depending on the density parameter p of each fiber-reinforced resin layer. Except for using different types of fiber-reinforced resin layers, the same procedure as in Example 1 was carried out to produce a molded product (8). Its characteristics are given in Table 4.

[Example 9]

Two sheets of the molding composition 7 prepared in Reference example 32 and one sheet of the molding composition 12 prepared in Reference example 37 were used as fiber-reinforced resin layers. Here, each sheet of the molding composition 7 is regarded as a fiber-reinforced resin layer (X) while each sheet of the molding composition 12 is regarded as a fiber-reinforced resin layer (Y) depending on the density parameter p of each fiber-reinforced resin layer. Except for using different types of fiber-reinforced resin layers, the same procedure as in Example 1 was carried out to produce a molded product (9). Its characteristics are given in Table 4.

[Example 10]

Two sheets of the molding composition 15 prepared in Reference example 40 and one sheet of the molding composition 13 prepared in Reference example 38 were used as fiber-reinforced resin layers. Here, each sheet of the molding composition 15 is regarded as a fiber-reinforced resin layer (X) while each sheet of the molding composition 13 is regarded as a fiber-reinforced resin layer (Y) depending on the density parameter p of each fiber-reinforced resin layer. Except for using different types of fiber-reinforced resin layers, preheating them under a nitrogen atmosphere at 230°C in an extreme infrared radiation heating furnace, and controlling the surface temperature of the mold cavity for molding the first member (I) at 100°C, the same procedure as in Example 3 was carried out to produce a molded product (10). Its characteristics are given in Table 4.

[Example 11]

Two sheets of the molding composition 14 prepared in Reference example 39 and one sheet of the molding composition 16 prepared in Reference example 41 were used as fiber-reinforced resin layers. Here, each sheet of the molding composition 14 is regarded as a fiber-reinforced resin layer (X) while each sheet of the molding composition 16 is regarded as a fiber-reinforced resin layer (Y) depending on the density parameter p of each fiber-reinforced resin layer. Except for using different types of fiber-reinforced resin layers, the same procedure as in Example 10 was carried out to produce a molded product (11). Its characteristics are given in Table 4.

[Example 12]

Two sheets of the molding composition 19 prepared in Reference example 44 and one sheet of the molding composition 17 prepared in Reference example 42 were used as fiber-reinforced resin layers. Here, each sheet of the molding composition 19 is regarded as a fiber-reinforced resin layer (X) while each sheet of the molding composition 17 is regarded as a fiber-reinforced resin layer (Y) depending on the density parameter p of each fiber-reinforced resin layer. Except for using different types of fiber-reinforced resin layers, preheating them under a nitrogen atmosphere at 300°C in an extreme infrared radiation heating furnace, and controlling the surface temperature of the mold cavity for molding the first member (I) at 150°C, the same procedure as in Example 3 was carried out to produce a molded product (12). Its characteristics are given in Table 4.

[Example 13]

Two sheets of the molding composition 18 prepared in Reference example 43 and one sheet of the molding composition 20 prepared in Reference example 45 were used as fiber-reinforced resin layers. Here, each sheet of the molding composition 18 is regarded as a fiber-reinforced resin layer (X) while each sheet of the molding composition 20 is regarded as a fiber-reinforced resin layer (Y) depending on the density parameter p of each fiber-reinforced resin layer. Except for using different types of fiber-reinforced resin layers, the same procedure as in Example 12 was carried out to produce a molded product (13). Its characteristics are given in Table 4.

[Example 14]

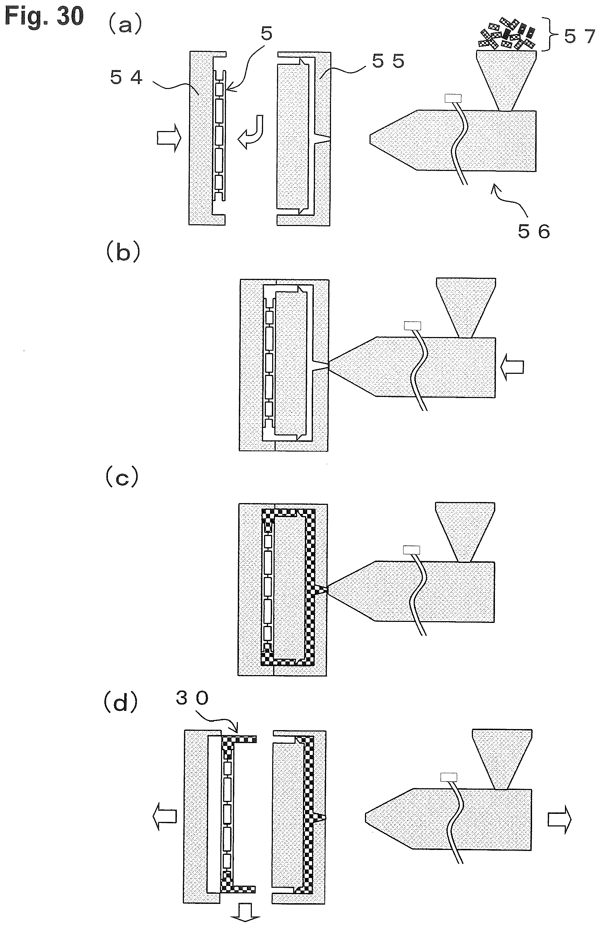

The molded product obtained in Example 1 was placed in an injection mold as shown in Fig. 30(a). For use as a third member (III), a unified molded product having a shape as shown in Fig. 30(d) was produced from the reinforced long-fiber nylon resin pellet of Reference example 13. Injection molding was performed using a J350EIII injection molding machine manufactured by The Japan Steel Works, Ltd., at a cylinder temperature of 260°C. The unified molded product thus obtained had high rigidity and lightweightness, and mechanically strong boning was achieved as a result of the third member (III) flowing into the vacancies formed along the edge of the molded product.

[Comparative example 1]

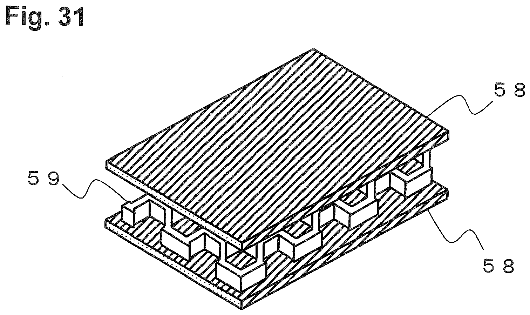

Two of the second member $(II_1)$ used in Example 1 were prepared as surface layer parts and the honeycomb core of nylon 6 resin produced in Reference example 46 was adopted as core part. They were stacked in such a manner that the resin film of each surface layer part came in contact with the honeycomb core of the core part as shown in Fig. 31 and they were heated at 180°C under a unit pressure of 1 MPa in a press molding machine. Subsequently, they were taken out of the press molding machine and cooled at room temperature to provide a molded product (31) in which the surface layer parts and the core part were unified. Its characteristics are given in Table 5.

[Comparative example 2]

Except for using the polypropylene foam sheet of Reference example 14 as the core part, the same procedure as in Comparative example 1 was carried out to produce a molded product (32). Its characteristics are given in Table 5.

[Comparative example 3]

Two first members $(I_{33})$, each having the same shape as the first member $(I_1)$ prepared in Example 1, were produced from the nylon 6 resin of Reference example 8 using an injection molding machine, and one of them was used as second member $(II_{33})$. The first member $(I_{33})$ and the second member $(II_{33})$ thus obtained were combined so that their core parts would come in contact with each other as in Example 3 and the core parts were bonded by an ultrasonic welding machine to provide a molded product (33). Its characteristics are given in Table 5.

[Comparative example 4]

Except for using the reinforced long-fiber nylon resin pellet of Reference example 15, the same procedure as in Comparative example 3 was carried out to produce a molded product (34). Its characteristics are given in Table 5.

[Comparative example 5]

Except for using two sheets of the molding composition 10 of Reference example 35, which is regarded as fiber-reinforced resin layer (X), as fiber-reinforced resin layers instead of the molding composition 1 and the molding composition 2, the same procedure as in Example 1 was carried out to produce a molded product (35). Its characteristics are given in Table 5.

[Comparative example 6]

Two sheets of the molding composition 5 prepared in Reference example 30 and one sheet of the molding composition 6 prepared in Reference example 31 were used as fiber-reinforced resin layers. Here, the molding composition 5 and molding composition 6 are regarded as fiber-reinforced resin layer (X) depending on the density parameter p of the fiber-reinforced resin layers. These molding compositions were stacked in the structure of molding composition 5/molding composition 6/molding composition 5 to provide a preform. Except for using the preform obtained above, the same procedure as in Example 1 was carried out to produce a molded product (36). Its characteristics are given in Table 5.

[Table 1]

| | | Molding com-position 1 | Molding com-position 2 | Molding com-position 3 | Molding com-position 4 | Molding com-position 5 | Molding com-position 6 | Molding com-position 7 | Molding com-position 8 | Molding com-position 9 | Molding com-position 10 |
|---|---|---|---|---|---|---|---|---|---|---|---|
| Reinforcing fiber | | carbon fiber | carbon fiber | carbon fiber | carbon fiber | carbon fiber | carbon fiber | carbon fiber | carbon fiber | carbon fiber | carbon fiber |
| density | [g/cm$^3$] | 1.16 | 1.19 | 1.26 | 1.26 | 1.26 | 1.39 | 1.26 | 1.19 | 1.26 | 1.19 |
| monofilament diameter | [mm] | 7 | 7 | 7 | 7 | 7 | 7 | 7 | 7 | 7 | 7 |
| number-average fiber length Ln | [mm] | 1.8 | 1.7 | 1.6 | 1.6 | 2.7 | 2.6 | 4.8 | 5.8 | 5.8 | 23.0 |
| bundled number k | [-] | 1.2 | 1.2 | 1.2 | 1.2 | 1.2 | 1.2 | 1.2 | 1.2 | 1.2 | 7.3 |
| Resin | | PA6 | PA6 | PA6 | PA6 | PA6 | PA6 | PA6 | PA6 | PA6 | PA6 |
| Characteristics of molding composition | | | | | | | | | | | |
| fiber weight percent | [wt%] | 7.8 | 15.1 | 28.6 | 28.6 | 28.6 | 51.6 | 28.6 | 15.1 | 28.6 | 15.1 |
| average thickness h | [mm] | 0.50 | 0.50 | 0.50 | 0.60 | 0.15 | 0.50 | 0.15 | 0.15 | 0.15 | 0.40 |
| basis weight of reinforcing fiber Wcf | [g/m$^2$] | 44 | 89 | 178 | 213 | 53 | 356 | 53 | 27 | 53 | 71 |
| density param-eter | [-] | $3.5 \times 10^3$ | $6.3 \times 10^3$ | $1.1 \times 10^4$ | $1.1 \times 10^4$ | $3.2 \times 10^4$ | $5.9 \times 10^4$ | $1.0 \times 10^5$ | $7.3 \times 10^4$ | $1.5 \times 10^5$ | $1.9 \times 10^5$ |
| fiber-reinforced resin layer | [-] | (Y) | (Y) | (Y) | (Y) | (X) | (X) | (X) | (X) | (X) | (X) |
| extension rate | [%] | 460 | 370 | 290 | 290 | 270 | 240 | 240 | 240 | 230 | 200 |
| two-dimensional orientation angle | [°] | 38 | 39 | 41 | 41 | 41 | 39 | 41 | 40 | 39 | 36 |

EP 2 939 818 B1

[Table 2]

| | | | molding com-position 11 | molding com-position 12 | molding com-position 13 | molding com-position 14 | molding com-position 15 | molding com-position 16 | molding com-position 17 | molding com-position 18 | molding com-position 19 | molding com-position 20 |
|---|---|---|---|---|---|---|---|---|---|---|---|---|
| reinforcing fiber | | | carbon fiber | glass fiber | carbon fiber | carbon fiber | carbon fiber | carbon fiber | carbon fiber | carbon fiber | carbon fiber | carbon fiber |
| | density | [g/cm$^3$] | 1.26 | 1.40 | 1.08 | 1.08 | 1.08 | 1.03 | 1.2 | 1.23 | 1.23 | 1.26 |
| | monofilament diameter | [mm] | 7 | 10 | 7 | 7 | 7 | 7 | 7 | 7 | 7 | 7 |
| | number-average fiber length Ln | [mm] | 0.2 | 2.4 | 1.3 | 2.4 | 4.4 | 0.2 | 1.8 | 2.8 | 5.9 | 0.2 |
| | bundled number k | [-] | 1.4 | 2.3 | 1.1 | 1.1 | 1.1 | 1.5 | 1.1 | 1.1 | 1.1 | 1.7 |
| resin | | | PA6 | PA6 | PP | PP | PP | PP | PPS | PPS | PPS | PPS |
| | characteristics of molding composition | | | | | | | | | | | |
| | fiber weight percent | [wt%] | 28.6 | 35.7 | 33.3 | 33.3 | 33.3 | 26.1 | 12.9 | 17.2 | 17.2 | 25.0 |
| | average thickness | [mm] | 0.50 | 0.50 | 0.50 | 0.15 | 0.15 | 0.50 | 0.5 | 0.15 | 0.15 | 0.50 |
| | basis weight of reinforcing fiber Wcf | [g/m$^2$] | 178 | 250 | 178 | 53 | 53 | 133 | 89 | 37 | 37 | 178 |
| | density param-eter | [-] | $1.5\times10^2$ | $6.4\times10^3$ | $8.0\times10^3$ | $2.7\times10^4$ | $9.2\times10^4$ | $1.0\times10^2$ | $7.7\times10^3$ | $2.5\times10^4$ | $1.1\times10^5$ | $1.2\times10^2$ |
| | fiber-rein-forced resin layer | [-] | (Y) | (Y) | (Y) | (X) | (X) | (Y) | (Y) | (X) | (X) | (Y) |
| | extension rate | [%] | 380 | 270 | 320 | 240 | 230 | 400 | 330 | 230 | 210 | 390 |
| | two-dimen-sional orienta-tion angle | [°] | 41 | 39 | 39 | 42 | 41 | 41 | 39 | 40 | 41 | 41 |

[Table 3]

| First member (I) | | | | Example 1 | Example 2 | Example 3 | Example 4 | Example 5 | Example 6 | Example 7 |
|---|---|---|---|---|---|---|---|---|---|---|
| | molding composition | molding composition (X) | [-] | molding composition 9 | molding composition 8 | molding composition 9 | molding composition 9 | molding composition 9 | molding composition 9 | molding composition 7 |
| | | molding composition (Y) | [-] | molding composition 3 | molding composition 2 | molding composition 3 | molding composition 3 | molding composition 3 | molding composition 4 | molding composition 1 |
| | molding | heating equipment | [-] | IR heater | IR heater | IR heater | IR heater | IR heater | IR heater | IR heater |
| | | heating temperature | [°C] | 280 | 280 | 280 | 280 | 280 | - | 280 |
| | | heating time | [min] | 10 | 10 | 10 | 10 | 10 | 5 | 10 |
| | | molding method | [-] | stamping press molding | stamping press molding | stamping press molding | stamping press molding | stamping press molding | hot pressing | stamping press molding |
| | | groove width b | [mm] | 2 | 2 | 2 | 2 | 2 | 2 | 2 |
| | | molding temperature | [°C] | 120 | 120 | 120 | 120 | 120 | 260 | 120 |
| | | molding pressure | [MPa] | 30 | 15 | 30 | 30 | 30 | 5 | 30 |
| | molded product | core part | number of reinforcing fiber threads extending penetratingly | [threads /mm$^2$] | 3100 | 750 | 3100 | 3200 | 3000 | 3000 | 1100 |
| | | | two-dimensional orientation angle | [°] | 40 | 38 | 40 | 39 | 37 | 40 | 40 |
| | | | proportion of core part | [%] | 38 | 38 | 38 | 36 | 42 | 38 | 38 |

EP 2 939 818 B1

29

(continued)

| | | | | | Example 1 | Example 2 | Example 3 | Example 4 | Example 5 | Example 6 | Example 7 |
|---|---|---|---|---|---|---|---|---|---|---|---|
| | | surface layer part | homogenization | [%] | 100 | 100 | 100 | 100 | 100 | 100 | 30 |
| | | | fiber length rate | [%] | 40 | 45 | 40 | 40 | 40 | 40 | 40 |
| | | | fiber reinforced rate | [-] | 28 | 52 | 28 | 26 | 32 | 34 | 26 |
| | | | shape of largest projected area of hollow structure | [-] | hexagon | hexagon | hexagon | square | circular | hexagon | hexagon |
| | | | height of protruding shape | [mm] | 1 | 1 | 1 | 1 | 1 | 1.3 | 1 |
| | | number-average fiber length Ln | | [mm] | 1.8 | 2.5 | 1.8 | 1.8 | 1.8 | 1.9 | 1.4 |
| Second member (II) | molding composition | | | [-] | Reference example 13 | Reference example 13 | molding composition 9 | molding composition 9 | molding composition 9 | Reference example 13 | Reference example 13 |
| | | | | [-] | Reference example 23 | Reference example 23 | molding composition 3 | molding composition 3 | molding composition 3 | Reference example 23 | Reference example 23 |
| | molding | molding temperature | | [°C] | 150 | 150 | same as for member (I) | same as for member (I) | same as for member (I) | 150 | 150 |
| | | molding pressure | | [MPa] | 0.6 | 0.6 | | | | 0.6 | 0.6 |
| | | molding time thickness | | [min] | 30 | 30 | | | | 30 | 30 |
| | molded product | | | [mm] | 0.4 | 0.4 | | | | 0.4 | 0.4 |
| Molded product | method for bonding first member (I) and second member (II) | | | [-] | heat welding | heat welding | ultrasonic welding | ultrasonic welding | ultrasonic welding | heat welding | heat welding |
| | molding | molding temperature | | [°C] | 180 | 180 | - | - | - | 180 | 180 |
| | | molding pressure | | [MPa] | 1 | 1 | - | - | - | 1 | 1 |
| | | molding time | | [min] | 1 | 1 | - | - | - | 1 | 1 |
| | maximum thickness | | | [mm] | 1.8 | 1.8 | 2.8 | 2.8 | 2.8 | 2.1 | 1.8 |
| | specific gravity | | | [-] | 0.89 | 0.86 | 0.7 | 0.68 | 0.74 | 0.83 | 0.93 |

(continued)

|  |  | Example 1 | Example 2 | Example 3 | Example 4 | Example 5 | Example 6 | Example 7 |
|---|---|---|---|---|---|---|---|---|
| shear strength of core part | [MPa] | 150 | 110 | 150 | 140 | 140 | 150 | 130 |
| rigidity of molded product | [-] | A | B | A | A | A | A | B |

[Table 4]

| | | | | Example 8 | Example 9 | Example 10 | Example 11 | Example 12 | Example 13 |
|---|---|---|---|---|---|---|---|---|---|
| first member (I) | molding composition | molding composition (X) | [-] | molding composition 5 | molding composition 7 | molding composition 15 | molding composition 14 | molding composition 19 | molding composition 18 |
| | | molding composition (Y) | [-] | molding composition 11 | molding composition 12 | molding composition 13 | molding composition 16 | molding composition 17 | molding composition 20 |
| | molding | heating equipment | [-] | IR heater | IR heater | IR heater | IR heater | IR heater | IR heater |
| | | heating temperature | [°C] | 280 | 280 | 230 | 230 | 300 | 300 |
| | | heating time | [min] | 10 | 10 | 10 | 10 | 10 | 10 |
| | | molding method | [-] | stamping press molding | stamping press molding | stamping press molding | stamping press molding | stamping press molding | stamping press molding |
| | | groove width b | [mm] | 2 | 2 | 2 | 2 | 2 | 2 |
| | | molding temperature | [°C] | 120 | 120 | 100 | 100 | 150 | 150 |
| | | molding pressure | [MPa] | 30 | 30 | 30 | 30 | 30 | 30 |
| | molded product | core part | number of reinforcing fiber threads extending penetratingly | [threads /mm$^2$] | 2300 | 1400 | 3000 | 2900 | 2800 | 3300 |
| | | | two-dimensional orientation angle | [°] | 39 | 41 | 39 | 40 | 41 | 39 |
| | | | proportion of core part | [%] | 38 | 38 | 38 | 38 | 38 | 38 |

(continued)

| | | | | | Example 8 | Example 9 | Example 10 | Example 11 | Example 12 | Example 13 |
|---|---|---|---|---|---|---|---|---|---|---|
| | | surface layer part | homogenization | [%] | 100 | 100 | 80 | 100 | 80 | 75 |
| | | | fiber length rate | [%] | 45 | 40 | 40 | 45 | 40 | 45 |
| | | | fiber reinforced rate | [-] | 18 | 42 | 48 | 27 | 52 | 29 |
| | | | shape of largest projected area of hollow structure | [-] | hexagon | hexagon | hexagon | hexagon | hexagon | hexagon |
| | | | height of protruding shape | [mm] | 1 | 1 | 1 | 1 | 1 | 1 |
| | | number-average fiber length Ln | | [mm] | 1.1 | 2.8 | 2.4 | 1.3 | 3.6 | 1.2 |
| second member (II) | molding composition | | | [-] | Reference example 13 | Reference example 13 | molding composition 15 | molding composition 14 | molding composition 19 | molding composition 18 |
| | | | | [-] | Reference example 23 | Reference example 23 | molding composition 13 | molding composition 16 | molding composition 17 | molding composition 20 |
| | molding | | molding temperature | [°C] | 150 | 150 | same as for member (I) | same as for member (I) | same as for member (I) | same as for member (I) |
| | | | molding pressure | [MPa] | 0.6 | 0.6 | | | | |
| | | | molding time | [min] | 30 | 30 | | | | |
| | molded product | thickness | | [mm] | 0.4 | 0.4 | | | | |
| molded product | method for bonding first member (I) and second member (II) | | | [-] | heat welding | heat welding | ultrasonic welding | ultrasonic welding | ultrasonic welding | ultrasonic welding |
| | molding | | molding temperature | [°C] | 180 | 180 | - | - | - | - |
| | | | moldinn pressure | [MPa] | 1 | 1 | - | - | - | - |
| | | | molding time | [min] | 1 | 1 | - | - | - | - |
| | maximum thickness | | | [mm] | 1.8 | 1.8 | 2.8 | 2.8 | 2.8 | 2.8 |
| | specific gravity | | | [-] | 0.89 | 0.93 | 0.6 | 0.58 | 0.67 | 0.7 |
| | shear strength of core part | | | [MPa] | 120 | 110 | 120 | 110 | 130 | 100 |

(continued)

| | | Example 8 | Example 9 | Example 10 | Example 11 | Example 12 | Example 13 |
|---|---|---|---|---|---|---|---|
| rigidity of molded product | [-] | B | B | A | A | A | A |

[Table 5]

| | | | | Comparative example 1 | Comparative example 2 | Comparative example 3 | Comparative example 4 | Comparative example 5 | Comparative example 6 |
|---|---|---|---|---|---|---|---|---|---|
| molded product | molding composition | surface layer material | [-] | Reference example 13 | Reference example 13 | | | | |
| | | | [-] | Reference example 23 | Reference example 23 | | | | |
| | | core | [-] | Reference example 46 | Reference example 14 | | | | |
| | | first member (I) | [-] | | | Reference example 8 | Reference example 15 | | |
| | | second member (II) | [-] | | | Reference example 8 | Reference example 15 | | |
| | | fiber-reinforced resin layer (X) | [-] | | | | | molding composition 10 | molding composition 5/molding composition 6 |
| | | fiber-reinforced resin layer (Y) | [-] | | | | | | |
| | molding | molding method | [-] | hot pressing | hot pressing | injection molding | injection molding | stamping press molding | stamping press molding |
| | | groove width | [mm] | 2 | - | 2 | 2 | 2 | 2 |
| | | core part | number of reinforcing fiber threads extending penetratingly [threads/mm$^2$] | 0 | 0 | 0 | 500 | 150 | 300 |
| | | | two-dimensional orientation angle [°] | - | - | - | 10 | 38 | 40 |
| | | | proportion of core part [%] | 38 | 100 | 38 | 38 | 38 | 38 |

EP 2 939 818 B1

| | | | | | Comparative example 1 | Comparative example 2 | Comparative example 3 | Comparative example 4 | Comparative example 5 | Comparative example 6 |
|---|---|---|---|---|---|---|---|---|---|---|
| molded product | surface layer part | homogenization | [%] | | - | - | - | 100 | 20 | 30 |
| | | fiber length rate | [%] | | - | - | - | 30 | 15 | 30 |
| | | fiber reinforced rate | [-] | | - | - | - | 4.5 | 90 | 22 |
| | | shape of largest projected area of hollow structure | [%] | | hexagon | hexagon | hexagon | hexagon | hexagon | hexagon |
| | | height of protruding shape | [mm] | | 1 | 1 | 1 | 1 | 1 | 1 |
| | number-average fiber length Ln | | [mm] | | - | - | 0 | 0.5 | 20 | 1.6 |
| method for bonding first member (I) and second member (II) | | | [-] | | heat welding | heat welding | ultrasonic welding | ultrasonic welding | heat welding | heat welding |
| molding | | molding temperature | [°C] | | 180 | 180 | - | - | 180 | 180 |
| | | molding pressure | [MPa] | | 1 | 1 | - | - | 1 | 1 |
| | | molding time | [min] | | 1 | 1 | - | - | 1 | 1 |
| maximum thickness | | | [mm] | | 1.8 | 1.8 | 2.8 | 2.8 | 1.8 | 1.8 |
| specific gravity | | | [-] | | 0.93 | 0.94 | 0.63 | 1.05 | 0.86 | 0.93 |
| shear strength of core part | | | [MPa] | | 25 | 30 | 15 | 70 | 50 | 50 |
| rigidity of molded product | | | [-] | | C | C | C | C | C | C |

EP 2 939 818 B1

**EXPLANATION OF NUMERALS**

1. planar surface layer part
2. protruding core part
3. first member (I)
4. second member (II)
5. molded product
6. boundary surface between core part and surface layer part
7. reinforcing fiber extending through boundary surface
8. reinforcing fiber existing in surface layer part
9. reinforcing fiber existing in core part
10. reinforcing monofilament (l)
11. reinforcing monofilament (m)
12. reinforcing monofilament (n)
13. reinforcing monofilament (o)
14. reinforcing monofilament (p)
15. reinforcing monofilament (q)
16. reinforcing monofilament (r)
17. two-dimensional orientation angle
18. stainless steel mesh sheet
19. reinforcing fiber
20. length Lf of fiber segment existing in surface layer part
21. length Lr of fiber segment existing in core part
22. protruding shape
23. protruding shape
24. vacancy
25. mold (hexagonal) of concave shape
26. first member (I) with regular hexagonal vacancy
27. frame
28. boss rib
29. hinge
30. unified molded product
31-1 to 31-8. fiber bundle
32-1, 32-2. flow unit
33. monofilament
34. fiber bundle
d0. diameter of monofilament
Rb. width of flow unit
Rh. height of flow unit
35. fiber-reinforced resin layer
36. mold with groove
37. projected area of core part
38. projected area of surface layer part
39. polishing machine
40. chopped reinforcing fiber
41. dispersion medium
42. dispersion vessel
43. stirrer
44. outlet cock
45. papermaking tank
46. mesh conveyor
47. conveyor
48. continuous carbon fiber prepreg
49. nylon 6 resin film
50. preform
51. ultrasonic welding machine

52. mold (square) of concave shape
53. mold (circular) of concave shape
54. movable-side mold
55. fixed-side mold
56. injection molding machine
57. reinforced long-fiber nylon resin pellet
58. skin material
59. core

**Claims**

1. A molded product comprising:

   a first member (I) containing a planar surface layer part and a protruding core part, and a second member (II) unified therewith,
   the first member (I) being of a fiber-reinforced resin (A) formed of a reinforcing fiber (a1) and a matrix resin (a2),
   part of the threads of the reinforcing fiber (a1) extending penetratingly between the surface layer part and the core part,
   the part of the threads of the reinforcing fiber (a1) extending penetratingly at a rate of 400 threads/mm$^2$ or more, as measured according to the method as disclosed in the description, through the boundary surface between the surface layer part and the core part,
   the reinforcing fiber (a1) having a number-average fiber length Ln of 1 mm or more, wherein the number-average fiber length Ln is calculated by equation (7),

   $$L n = \frac{\sum L\ i}{4\ 0\ 0} \cdot \cdot \cdot (7)$$

   , wherein Li is the fiber length for i = 1, 2, 3, ..., 400
   the threads of the reinforcing fiber (a1) are dispersed randomly, wherein the expression "dispersed randomly" means that the average value of the random orientation angle is in the range of 10 to 80 degrees as measured according to the method as disclosed in the description, and
   the core part forming a hollow structure.

2. The molded product as claimed in claim 1, wherein the two-dimensional orientation angle $\theta r$ of the reinforcing fiber (a1) in the core part is 10 to 80 degrees, wherein the two-dimensional orientation angle was determined between a reinforcing monofilament and another reinforcing monofilament that crosses the former from image observation, wherein for one reinforcing monofilament 20 measurements of the two-dimensional orientation angle were taken..

3. The molded product as claimed in either claim 1 or 2, wherein the homogenization of the surface layer part and the core part in the first member (I), calculated by the equations given below is 70% or more,
   wherein homogenization refers to the proportion of the weight packing rate of the reinforcing fiber existing in the core part to the weight packing rate of the reinforcing fiber existing in the surface layer part,
   wherein a sample of the core part which was cut out of a molded product and the weight Mrc of the core part was measured, after the weight measurement, the sample was heated in air at 500°C for one hour to burn off the resin component and then the weight Mrf of the remaining reinforcing fiber was measured, the weight packing rate (%) Wfr of the reinforcing fiber in the core part was calculated from these weight measurements by Equation (9)

   $$W f r = \frac{M r f}{M r c} \times 1\ 0\ 0 \cdot \cdot \cdot \cdot (9)$$

   [Formula 1]

$$\text{Homogenization} = (Wfr/Wff) \times 100 \ ..... \qquad (11)$$

wherein Wff is the weight packing rate (%) of the reinforcing fiber in the surface layer part.

4. The molded product as claimed in any one of claims 1 to 3, wherein for a thread of the reinforcing fiber (a1) that extends penetratingly between the surface layer part and the core part, the fiber length rate Lp which is calculated by equation (1) given below when the length relation between the length Lr (μm) of that segment of the thread, as measured according to the method as disclosed in the description, which exists in the core part and the length Lf (μm) of that segment of the thread, as measured according to the method as disclosed in the description, which exists in the surface layer part is as represented by Lr ≤ Lf or by equation (2) given below when it is as represented by Lr > Lf is 30% to 50% and at the same time, the fiber reinforced rate Fr which is calculated by equation (3) given below when the length relation between the length Lr (μm) of that segment of the thread which exists in the core part and the length Lf (μm) of that segment of the thread which exists in the surface layer part is as represented by Lr ≤ Lf or by equation (4) given below when it is as represented by Lr > Lf is 10 or more.
[Formula 2]

$$\text{Fiber length rate Lp} = \{Lr / (Lr + Lf)\} \times 100 \ \ldots.. (1)$$

[Formula 3]

$$\text{Fiber length rate Lp} = \{Lf / (Lr + Lf)\} \times 100 \ \ldots.. (2)$$

[Formula 4]

$$\text{Fiber reinforced rate Fr} = \{Lr \times (Lp / 100)\} \times 100 \ \ldots.. (3)$$

[Formula 5]

$$\text{Fiber reinforced rate Fr} = \{Lf \times (Lp / 100)\} \times 100 \ \ldots.. (4)$$

5. The molded product as claimed in any one of claims 1 to 4, wherein the projected area of the core part accounts for 5% to 80% of the projected area of the surface layer part, wherein the projected area of the core part was determined by an image of the surface of the core part that is observed with a scanner and binarized to determine the area of the core part, one in which the width and length of the core part are measured with a micrometer or calipers, followed by calculation, and one in which the area of the core part is calculated from the area of the vacancy formed by the core part,.

6. The molded product as claimed in any one of claims 1 to 5, wherein the second member (II) has a protruding core part having an identical shape as the one in the first member (I).

7. The molded product as claimed in any one of claims 1 to 6, wherein the largest projected plane of the hollow structure formed by the protruding shape in the first member (I) and/or that in the second member (II) have at least one shape selected from the group consisting of circle, ellipse, rhombus, equilateral triangle, square, rectangle, and regular hexagon.

8. The molded product as claimed in any one of claims 1 to 7 that meets at least either of the following requirements (i) and (ii):

    (i) the maximum thickness of the molded product is 3.0 mm or less,
    (ii) the specific gravity of the molded product is 1.0 or less, as measured according to JIS K7112 A with ethanol as immersion liquid.

9. The molded product as claimed in any one of claims 1 to 8, wherein the height of the protruding shape in the first member (I) and/or that in the second member (II) is 2.0 mm or less.

10. The molded product as claimed in any one of claims 1 to 9, wherein the reinforcing fiber (a1) meets at least either of the following requirements (iii) and (iv):

(iii) the reinforcing fiber (a1) comprises discontinuous monofilaments that are dispersed randomly,
(iv) the reinforcing fiber (a1) is carbon fiber.

11. The molded product as claimed in any one of claims 1 to 10, wherein the matrix resin (a2) is at least one thermoplastic resin selected from the group consisting of polyamide resin, polypropylene resin, polyester resin, polycarbonate resin, polyphenylene sulfide resin, and polyether ether ketone resin.

12. A unified molded product comprising the molded product as claimed in any one of claims 1 to 11 joined to a third member (III) having a different structure.

13. The unified molded product as claimed in claim 12 comprising a molded product designed to serve as face plate and a third member (III) having a frame part, the face plate and the frame part unified with each other to provide a unified molded product that can be used in electric/electronic instruments, office automation equipment, home electric appliances, medical care equipment, automobile parts, aircraft parts, or building materials.

14. A production method for the molded product as claimed in any one of claims 1 to 11 comprising a step for producing the first member (I) in which a preform comprising a fiber-reinforced resin layer (X) having a density parameter p, which is defined below, of $2 \times 10^4$ or more and $1 \times 10^8$ or less and a fiber-reinforced resin layer (Y) having a density parameter p of $1 \times 10^1$ or more and not more than 0.1 times the density parameter of the fiber-reinforced resin layer (X) is press-molded using a mold half having a concave shape to form a protruding core part in the first member (I) and an opposite mold half mating therewith:
[Formula 6]

$$p = \frac{n \times Ln^2}{h} \cdot \cdot \cdot \cdot \ (\bar{5})$$

wherein

n is the number of flow units of reinforcing fiber contained in a unit area (1 mm$^2$) of the fiber-reinforced resin, wherein a 100 mm $\times$ 100 mm square sheet was cut out of a fiber-reinforced resin layer and the square sheet was heated in air at 500°C for one hour to burn off the resin component and the remaining reinforcing fiber was observed by optical microscopy, followed by calculating the bundled average number of flow units composed of reinforcing fiber, when a flow unit has a width and height of about a diameter d0 ($\mu$m), then it is a monofilament and the bundled number is one, after randomly selecting 100 flow units composed of reinforcing fiber, measurements were taken by the above operation and their average was adopted to represent the bundled number k of the flow units
h is the thickness (mm) of the fiber-reinforced resin layer, and
Ln is the number-average fiber length (mm) of the reinforcing fiber.

15. The production method for the molded product as claimed in claim 14, wherein the preform comprises the fiber-reinforced resin layer (X) and the fiber-reinforced resin layer (Y) stacked one on top of the other.

**Patentansprüche**

1. Formkörper, umfassend:

ein erstes Bauteil (I), das einen planaren Oberflächenschichtteil und einen vorstehenden Kernteil enthält, und ein zweites Bauteil (II), das damit vereinigt ist,
wobei das erste Bauteil (I) von einem faserverstärkten Harz (A) ist, das aus einer Verstärkungsfaser (a1) und einem Matrixharz (a2) gebildet ist,
wobei sich ein Teil der Fäden der Verstärkungsfaser (a1) zwischen dem Oberflächenschichtteil und dem Kernteil hindurch erstreckt,
wobei sich der Teil der Fäden der Verstärkungsfaser (a1) in einer Menge von 400 Fäden/mm$^2$ oder mehr,

gemessen nach dem in der Beschreibung offenbarten Verfahren, durch die Grenzfläche zwischen dem Oberflächenschichtteil und dem Kernteil hindurch erstreckt,
wobei die Verstärkungsfaser (a1) eine zahlenmittlere Faserlänge Ln von 1 mm oder mehr aufweist, wobei die zahlenmittlere Faserlänge Ln durch Gleichung (7) berechnet wird,

$$Ln = \frac{\sum L_i}{400} \cdots (7)$$

, wobei Li die Faserlänge für i = 1, 2, 3, 3, ....., 400 ist,
wobei die Fäden der Verstärkungsfaser (a1) zufällig verteilt sind, wobei der Ausdruck "zufällig verteilt" bedeutet, dass der Durchschnittswert des zufälligen Orientierungswinkels im Bereich von 10 bis 80 Grad liegt, gemessen nach dem in der Beschreibung offenbarten Verfahren, und
wobei das Kernteil eine Hohlstruktur bildet.

2. Formkörper nach Anspruch 1, wobei der zweidimensionale Orientierungswinkel θr der Verstärkungsfaser (a1) im Kernteil 10 bis 80 Grad beträgt, wobei der zweidimensionale Orientierungswinkel zwischen einem Verstärkungsmonofilament und einem anderen Verstärkungsmonofilament bestimmt wurde, das das erstere in einer Bildbetrachtung kreuzt, wobei für ein Verstärkungsmonofilament 20 Messungen des zweidimensionalen Orientierungswinkels durchgeführt wurden.

3. Formkörper nach Anspruch 1 oder 2, wobei die Homogenisierung des Oberflächenschichtteils und des Kernteils im ersten Bauteil (I), berechnet nach den unten angegebenen Gleichungen, 70% oder mehr beträgt,
wobei sich die Homogenisierung auf das Verhältnis der Gewichtspackrate der im Kernteil vorhandenen Verstärkungsfaser zur Gewichtspackrate der im Oberflächenschichtteil vorhandenen Verstärkungsfaser bezieht,
wobei eine Probe des Kernteils, die aus einem Formkörper ausgeschnitten wurde, und das Gewicht Mrc des Kernteils gemessen wurde, nach der Gewichtsmessung die Probe eine Stunde lang an Luft bei 500°C erhitzt wurde, um die Harzkomponente auszubrennen, dann das Gewicht Mrf der verbleibenden Verstärkungsfaser gemessen wurde und die Gewichtspackrate (%) Wfr der Verstärkungsfaser im Kernteil aus diesen Gewichtsmessungen durch Gleichung (9) berechnet wurde

$$Wfr = \frac{Mrf}{Mrc} \times 100 \cdots (9)$$

[Formel 1]

Homogenisierung = (Wfr/Wff) × 100  .....                    (11)

wobei Wff die Gewichtspackrate (%) der Verstärkungsfaser im Oberflächenschichtteil ist.

4. Formkörper wie in einem der Ansprüche 1 bis 3 beansprucht, wobei für einen Faden der Verstärkungsfaser (a1), der sich zwischen dem Oberflächenschichtteil und dem Kernteil hindurch erstreckt, die Faserlängenrate Lp, die durch die nachstehende Gleichung (1) berechnet wird, wenn das Längenverhältnis zwischen der Länge Lr ($\mu$m) dieses Fadenabschnitts, gemessen nach dem in der Beschreibung offenbarten Verfahren, das im Kernteil vorhanden ist, und der Länge Lf ($\mu$m) dieses Fadenabschnitts, gemessen nach dem Verfahren, wie es in der Beschreibung offenbart ist, das im Oberflächenschichtteil vorhanden ist, wie durch Lr ≤ Lf dargestellt ist, oder durch die unten angegebene Gleichung (2) berechnet wird, wenn es durch Lr > Lf dargestellt ist, 30% bis 50% beträgt und gleichzeitig die faserverstärkte Rate Fr, die durch die nachstehende Gleichung (3) berechnet wird, wenn die Längenbeziehung zwischen der Länge Lr ($\mu$m) des im Kernteil vorhandenen Abschnitts des Fadens und der Länge Lf ($\mu$m) des im Oberflächenschichtteil vorhandenen Abschnitts des Fadens wie durch Lr ≤ Lf dargestellt wird oder durch die nachstehende Gleichung (4) berechnet wird, wenn sie durch Lr > Lf dargestellt wird, 10 oder mehr beträgt.
[Formel 2]

Faserlängenrate Lp = {Lr / (Lr + Lf)}} × 100 ..... (1)

[Formel 3]

$$\text{Faserlängenrate } Lp = \{Lf / (Lr + Lf)\} \times 100 \ \ldots.\ (2)$$

[Formel 4]

$$\text{Faserverstärkte Rate } Fr = \{Lr \times (Lp / 100)\} \times 100 \ \ldots.\ (3)$$

[Formel 5]

$$\text{Faserverstärkte Rate } Fr = \{Lf \times (Lp / 100)\} \times 100 \ \ldots.\ (4)$$

5. Formkörper nach einem der Ansprüche 1 bis 4, wobei die projizierte Fläche des Kernteils 5% bis 80% der projizierten Fläche des Oberflächenschichtteils ausmacht, wobei die projizierte Fläche des Kernteils durch ein Bild der Oberfläche des Kernteils bestimmt wurde, das mit einem Scanner beobachtet und binärisiert wird, um die Fläche des Kernteils zu bestimmen, wobei die Breite und Länge des Kernteils mit einem Mikrometer oder Messschiebern gemessen wird, gefolgt von einer Berechnung, und wobei die Fläche des Kernteils aus der Fläche der durch das Kernteil gebildeten Freifläche berechnet wird.

6. Formkörper nach einem der Ansprüche 1 bis 5, wobei das zweite Bauteil (II) einen vorstehenden Kernteil mit einer identischen Form wie die des ersten Bauteils (I) aufweist.

7. Formkörper nach einem der Ansprüche 1 bis 6, wobei die größte projizierte Ebene der Hohlstruktur, die durch die vorstehende Form im ersten Bauteil (I) und/oder das im zweiten Bauteil (II) gebildet wird, mindestens eine Form aufweist, die aus der Gruppe bestehend aus Kreis, Ellipse, Rhombus, gleichseitigem Dreieck, Quadrat, Rechteck und regelmäßigem Sechseck ausgewählt ist.

8. Formkörper nach einem der Ansprüche 1 bis 7, der mindestens eine der folgenden Anforderungen (i) und (ii) erfüllt:

   (i) die maximale Dicke des Formkörpers beträgt 3,0 mm oder weniger,
   (ii) das spezifische Gewicht des Formkörpers beträgt 1,0 oder weniger, gemessen nach JIS K7112 A mit Ethanol als Immersionsflüssigkeit.

9. Formkörper nach einem der Ansprüche 1 bis 8, wobei die Höhe der vorstehenden Form im ersten Bauteil (I) und/oder im zweiten Bauteil (II) 2,0 mm oder weniger beträgt.

10. Formkörper nach einem der Ansprüche 1 bis 9, wobei die Verstärkungsfaser (a1) mindestens eine der folgenden Anforderungen (iii) und (iv) erfüllt:

    (iii) die Verstärkungsfaser (a1) umfasst diskontinuierliche Monofilamente, die zufällig verteilt sind,
    (iv) die Verstärkungsfaser (a1) ist eine Kohlenstofffaser.

11. Formkörper nach einem der Ansprüche 1 bis 10, wobei das Matrixharz (a2) mindestens ein thermoplastisches Harz ausgewählt aus der Gruppe bestehend aus Polyamidharz, Polypropylenharz, Polyesterharz, Polycarbonatharz, Polyphenylensulfidharz und Polyetheretherketonharz ist.

12. Vereinigter Formkörper, umfassend den Formkörper nach einem der Ansprüche 1 bis 11, der mit einem dritten Bauteil (III) mit einer anderen Struktur verbunden ist.

13. Vereinigter Formkörper wie in Anspruch 12 beansprucht, umfassend einen Formkörper, der als Stirnplatte dient, und ein drittes Bauteil (III) mit einem Rahmenteil, wobei die Stirnplatte und der Rahmenteil miteinander vereinigt sind, um einen vereinigten Formkörper bereitzustellen, der in elektrischen/elektronischen Instrumenten, Büroautomatisierungsgeräten, elektrischen Haushaltsgeräten, medizinischen Pflegegeräten, Automobilteilen, Flugzeugteilen oder Baumaterialien verwendet werden kann.

**14.** Herstellungsverfahren für den Formkörper wie in einem der Ansprüche 1 bis 11 beansprucht, umfassend einen Schritt zur Herstellung des ersten Bauteils (I), in dem ein Rohling, umfassend eine faserverstärkte Harzschicht (X) mit einem Dichteparameter p, der unten definiert ist, von $2 \times 10^4$ oder mehr und $1 \times 10^8$ oder weniger und eine faserverstärkte Harzschicht (Y) mit einem Dichteparameter p von $1 \times 10^1$ oder mehr und nicht mehr als 0.1 mal der Dichteparameter der faserverstärkten Harzschicht (X) unter Verwendung einer Formschalenhälfte mit konkaver Form unter Bildung eines hervorstehenden Kernteils im ersten Bauteil (I) und einer gegenüberliegenden Formschalenhälfte, die damit zusammenpasst, pressgespritzt wird:

[Formel 6]

$$p = \frac{n \times L\,n^2}{h}, \cdot\,\cdot\,\cdot\;(5)$$

wobei

n die Anzahl der Strömungseinheiten der Verstärkungsfaser ist, die in einem Einheitsbereich (1 mm$^2$) des faserverstärkten Harzes enthalten sind, wobei eine 100 mm × 100 mm quadratische Platte aus einer faserverstärkten Harzschicht ausgeschnitten wurde und die quadratische Platte eine Stunde lang an Luft bei 500°C erhitzt wurde, um die Harzkomponente auszubrennen, und die verbleibende Verstärkungsfaser durch optische Mikroskopie beobachtet wurde, gefolgt von der Berechnung der gebündelten durchschnittlichen Anzahl von Strömungseinheiten, die von Verstärkungsfasern gebildet werden, wenn eine Strömungseinheit eine Breite und Höhe von etwa einem Durchmesser d0 (μm) hat, dann ist es ein Monofilament und die gebündelte Anzahl ist eins, nach zufälliger Auswahl von 100 Strömungseinheiten, die von Verstärkungsfasern gebildet werden, Messungen durch den obigen Vorgang durchgeführt wurden und ihr Durchschnitt angenommen wurde, um die gebündelte Anzahl k der Strömungseinheiten darzustellen,
h die Dicke (mm) der faserverstärkten Harzschicht ist und
Ln die zahlenmittlere Faserlänge (mm) der Verstärkungsfaser ist.

**15.** Herstellungsverfahren für den Formkörper wie in Anspruch 14 beansprucht, wobei der Rohling die faserverstärkte Harzschicht (X) und die faserverstärkte Harzschicht (Y) übereinander gestapelt umfasst.

### Revendications

**1.** Produit moulé comprenant :

un premier organe (I) contenant une partie de couche de surface plane et une partie d'âme saillante, et un deuxième organe (II) unifié à celui-ci,
le premier organe (I) étant en une résine renforcée de fibre (A) formée d'une fibre de renforcement (a1) et d'une résine de matrice (a2),
une partie des fils de la fibre de renforcement (a1) s'étendant de façon pénétrante entre la partie de couche de surface et la partie d'âme,
la partie des fils de la fibre de renforcement (a1) s'étendant de façon pénétrante a un taux de 400 fils/mm$^2$ ou plus, mesuré selon le procédé divulgué dans la description, à travers la surface limite entre la partie de couche de surface et la partie d'âme,
la fibre de renforcement (a1) ayant une longueur de fibre moyenne en nombre Ln de 1 mm ou plus, dans lequel la longueur de fibre moyenne en nombre Ln est calculée par l'équation (7), $L\,n = \dfrac{\sum L\,i}{400} \cdot\,\cdot\,\cdot\;(7)$ (7),

dans laquelle Li est la longueur de fibre pour i = 1, 2, 3, ..., 400
les fils de la fibre de renforcement (a1) sont dispersés aléatoirement, dans lequel l'expression « dispersés aléatoirement » signifie que la valeur moyenne de l'angle d'orientation aléatoire est dans la plage de 10 à 80 degrés mesuré selon le procédé divulgué dans la description, et
la partie d'âme formant une structure creuse.

**2.** Produit moulé selon la revendication 1, dans lequel l'angle d'orientation bidimensionnel θr de la fibre de renforcement (a1) dans la partie d'âme est de 10 à 80 degrés, dans lequel l'angle d'orientation bidimensionnel a été déterminé entre un monofilament de renforcement et un autre monofilament de renforcement qui croise le premier à partir d'une observation d'image, dans lequel pour un monofilament de renforcement 20 mesures de l'angle d'orientation bidimensionnel ont été prises.

**3.** Produit moulé selon la revendication 1 ou 2, dans lequel l'homogénéisation de la partie de couche de surface et de la partie d'âme dans le premier organe (I), calculée par les équations données ci-dessous est de 70 % ou plus, dans lequel l'homogénéisation désigne la proportion entre le taux de garnissage en poids de la fibre de renforcement existant dans la partie d'âme et le taux de garnissage en poids de la fibre de renforcement existant dans la partie de couche de surface,
dans lequel un échantillon de la partie d'âme qui a été découpé d'un produit moulé et le poids Mrc de la partie d'âme a été mesuré, après la mesure de poids, l'échantillon a été chauffé dans de l'air à 500 °C pendant une heure pour brûler le composant de résine puis le poids Mrf de la fibre de renforcement restante a été mesuré, le taux de garnissage en poids (%) Wfr de la fibre de renforcement dans la partie d'âme a été calculé à partir de ces mesures de poids par l'équation (9)

$$ Wfr = \frac{Mrf}{Mrc} \times 100 \cdots (9) $$

[Formule 1]

Homogénéisation = (Wfr/Wff) x 100 .....                    (11)

dans lequel Wff est le taux de garnissage en poids (%) de la fibre de renforcement dans la partie de couche de surface.

**4.** Produit moulé selon l'une quelconque des revendications 1 à 3, dans lequel pour un fil de la fibre de renforcement (a1) qui s'étend de façon pénétrante entre la partie de couche de surface et la partie d'âme, le taux de longueur de fibre Lp qui est calculé par l'équation (1) donnée ci-dessous lorsque la relation de longueur entre la longueur Lr (μm) de ce segment du fil, mesurée selon le procédé divulgué dans la description, qui existe dans la partie d'âme et la longueur Lf (μm) de ce segment du fil, mesurée selon le procédé divulgué dans la description, qui existe dans la partie de couche de surface est telle que représentée par Lr ≤ Lf ou par l'équation (2) donnée ci-dessous lorsqu'elle est telle que représentée par Lr > Lf est de 30 % à 50 % et en même temps, le taux de renforcement de fibre Fr qui est calculé par l'équation (3) donnée ci-dessous lorsque la relation de longueur entre la longueur Lr (μm) de ce segment du fil qui existe dans la partie d'âme et la longueur Lf (μm) de ce segment du fil qui existe dans la partie de couche de surface est telle que représentée par Lr ≤ Lf ou par l'équation (4) donnée ci-dessous lorsqu'elle est représentée par Lr > Lf est de 10 ou plus.
[Formule 2]

Taux de longueur de fibre Lp = {Lr/(Lr + Lf)} x 100 ..... (1)

[Formule 3]

Taux de longueur de fibre Lp = {Lf/(Lr + Lf)} x 100 ..... (2)

[Formule 4]

Taux de renforcement de fibre Fr = {Lr x (Lp/100)} x 100 ..... (3)

[Formule 5]

Taux de renforcement de fibre Fr = {Lf x (Lp/100)} x 100 ..... (4)

**5.** Produit moulé selon l'une quelconque des revendications 1 à 4, dans lequel l'aire projetée de la partie d'âme représente 5 % à 80 % de l'aire projetée de la partie de couche de surface, dans lequel l'aire projetée de la partie d'âme a été déterminée par une image de la surface de la partie d'âme qui est observée avec un dispositif de balayage et binarisée pour déterminer l'aire de la partie d'âme, l'une dans laquelle la largeur et la longueur de la partie d'âme sont mesurées avec un micromètre ou une jauge, suivie d'un calcul, et l'une dans laquelle l'aire de la partie d'âme est calculée à partir de l'aire de la lacune formée par la partie d'âme.

6. Produit moulé selon l'une quelconque des revendications 1 à 5, dans lequel le deuxième organe (II) a une partie d'âme saillante ayant une forme identique à celle du premier organe (I).

7. Produit moulé selon l'une quelconque des revendications 1 à 6, dans lequel le plan projeté le plus grand de la structure creuse formée par la forme saillante dans le premier organe (I) et/ou celui dans le deuxième organe (II) ont au moins une forme choisie dans le groupe consistant en un cercle, une ellipse, un rhombe, un triangle équilatéral, un carré, un rectangle, et un hexagone régulier.

8. Produit moulé selon l'une quelconque des revendications 1 à 7 qui satisfait au moins l'une ou l'autre des exigences (i) et (ii) suivantes :

   (i) l'épaisseur maximale du produit moulé est de 3,0 mm ou moins,
   (ii) la densité du produit moulé est de 1,0 ou moins, mesurée selon la norme JIS K7112 A avec de l'éthanol en tant que liquide d'immersion.

9. Produit moulé selon l'une quelconque des revendications 1 à 8, dans lequel la hauteur de la forme saillante dans le premier organe (I) et/ou celle dans le deuxième organe (II) est de 2,0 mm ou moins.

10. Produit moulé selon l'une quelconque des revendications 1 à 9, dans lequel la fibre de renforcement (a1) satisfait au moins l'une ou l'autre des exigences (iii) et (iv) suivantes :

    (iii) la fibre de renforcement (a1) comprend des monofilaments discontinus qui sont dispersés aléatoirement,
    (iv) la fibre de renforcement (a1) est une fibre de carbone.

11. Produit moulé selon l'une quelconque des revendications 1 à 10, dans lequel la matrice de résine (a2) est au moins une résine thermoplastique choisie dans le groupe consistant en une résine de polyamide, une résine de polypropylène, une résine de polyester, une résine de polycarbonate, une résine de polysulfure de phénylène, et une résine de polyéther éther cétone ;

12. Produit moulé unifié comprenant le produit moulé tel que revendiqué à l'une quelconque des revendications 1 à 11 assemblé à un troisième organe (III) ayant une structure différente.

13. Produit moulé unifié selon la revendication 12, comprenant un produit moulé conçu pour servir de face avant et un troisième organe (III) ayant une partie de cadre, la face avant et la partie de cadre étant unifiées l'une à l'autre pour fournir un produit moulé unifié qui peut être utilisé dans des instruments électriques/électroniques, des équipements de bureautique, des appareils électroménagers, des équipements de soins médicaux, des pièces automobiles, des pièces d'aéronef, ou des matériaux de construction.

14. Procédé de production du produit moulé tel que revendiqué à l'une quelconque des revendications 1 à 11, comprenant une étape de production du premier organe (I) dans laquelle une préforme comprenant une couche de résine renforcée de fibre (X) ayant un paramètre de masse volumique p, qui est défini en dessous de $2 \times 10^4$ ou plus et $1 \times 10^8$ ou moins et une couche de résine renforcée de fibre (Y) ayant un paramètre de masse volumique p de $1 \times 10^1$ ou plus et pas plus de 0,1 fois le paramètre de masse volumique de la couche de résine renforcée de fibre (X) est moulée à la presse à l'aide d'un demi-moule ayant une forme concave pour former une partie d'âme saillante dans le premier organe (I) et un demi-moule opposé s'appariant à celui-ci :
[Formule 6]

$$p = \frac{n \times L\, n^2}{h} \cdot \cdot \cdot \cdot (5)$$

dans lequel

n est le nombre d'unités d'écoulement de fibre de renforcement contenues dans une aire unitaire (1 mm$^2$) de la résine renforcée de fibre, dans lequel une feuille carrée de 100 mm x 100 mm a été découpée dans une couche de résine renforcée de fibre et la feuille carrée a été chauffée dans de l'air à 500 °C pendant une heure pour brûler le composant de résine et la fibre de renforcement restante a été observée par microscopie optique, suivie du calcul du nombre moyen groupé d'unités d'écoulement composées de fibre de renforcement, lorsqu'une unité d'écoulement a une largeur et une hauteur d'environ un diamètre d0 ($\mu$m), alors il s'agit d'un monofilament et le nombre groupé est un, après sélection aléatoire de 100 unités d'écoulement composées de fibre de renforcement, des mesures ont été prises par l'opération ci-dessus et leur moyenne a été adoptée pour représenter le nombre groupé k des unités d'écoulement

h est l'épaisseur (mm) de la couche de résine renforcée de fibre, et

Ln est la longueur de fibre moyenne en nombre (mm) de la fibre de renforcement.

15. Procédé de production du produit moulé selon la revendication 14, dans lequel la préforme comprend la couche de résine renforcée de fibre (X) et la couche de résine renforcée de fibre (Y) empilées l'une par-dessus l'autre.

## Fig. 1

## Fig. 2

(a)

(b)

(c)

EP 2 939 818 B1

**Fig. 5**

**Fig. 6**

49

Fig. 7

Fig. 8

**Fig. 9**

（ a ）

（ b ）

（ c ）

（ d ）

**Fig. 10**

（ e ）

（ f ）

（ g ）

（ h ）

（ i ）

（ j ）

Fig. 11

(a)  (b)

Fig. 12

## Fig. 13

## Fig. 14

**Fig. 15**

31-1    31-2    31-3    31-4

31-5    31-6    31-7    31-8

**Fig. 16**

32-1    32-2

2°    20°

## Fig. 17

3 3    3 3    3 4

R h

d 0    R b

## Fig. 18

3 5

( a )    ( b )

## Fig. 19

3 5

## Fig. 20

3 7

3 6

**Fig. 21**

**Fig. 22**

（ a ）　　　　　　　　　　　（ b ）

**Fig. 23**

(a)

(b)

**Fig. 24**

## Fig. 25

49

48

90°

0°

50

A

## Fig. 26

4

3

Fig. 27

Fig. 28

## Fig. 29

**Fig. 30** (a)

(b)

(c)

(d)

Fig. 31

5 8

5 9

5 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4862913 B
- JP 2008230235 A
- JP HEI639861 B
- JP SHO4967962 B
- JP H04201750 A